# EUROPEAN PATENT APPLICATION

(11) **EP 4 664 850 A1**
(43) Date of publication of application: **17.12.2025**
(21) Application number: 24759535.8
(22) Date of filing: 05.02.2024
(51) Int. Cl.: H04L 45/16

(54) **METHOD AND APPARATUS FOR TRANSMITTING DATA**

(30) Priority: 23.02.2023 CN 202310209709
(71) Applicant: Huawei Technologies Co., Ltd., Shenzhen, Guangdong 518129 (CN)
(72) Inventor: ZHU, Huiying, Shenzhen, Guangdong 518129 (CN); DONG, Pengpeng, Shenzhen, Guangdong 518129 (CN); WU, Fangzhou, Shenzhen, Guangdong 518129 (CN); WANG, Ting, Shenzhen, Guangdong 518129 (CN)
(74) Representative: Körber, Martin Hans
(86) International application number: PCT/CN2024/075892
(87) International publication number: WO 2024/174858

(57) **Abstract**

Embodiments of this application provide a data transmission method, which may be applied to a multi-hop IAB scenario. The method includes: A first IAB node receives a first data packet; and the first IAB node sends a second data packet to a plurality of second IAB nodes through multicast, where the second data packet is determined based on the first data packet, and the plurality of second IAB nodes are next-hop nodes of the first IAB node. According to this application, after the first IAB node receives a data packet, if a next node of the first IAB node includes a plurality of second IAB nodes, the first IAB node may send a data packet to the plurality of second IAB nodes through multicast, to implement multicast transmission in a multi-hop IAB scenario.

## Description

This application claims priority to Chinese Patent Application No. 202310209709.1, filed with the China National Intellectual Property Administration on February 23, 2023 and entitled "DATA TRANSMISSION METHOD AND APPARATUS", which is incorporated herein by reference in its entirety.

### TECHNICAL FIELD

Embodiments of this application relate to the communication field, and more specifically, to a data transmission method and an apparatus.

### BACKGROUND

To meet an ultra-high capacity requirement of a 5th generation (the 5th generation, 5G) mobile communication system, high-frequency small cell networking becomes a mainstream. A high-frequency carrier has a poor propagation characteristic, is severely attenuated due to blocking, and has small coverage. Therefore, a large quantity of small cells need to be densely deployed. Correspondingly, it is costly to provide fiber backhaul for the large quantity of densely deployed small cells, and construction is difficult. Therefore, an economical and convenient backhaul solution is needed. In addition, to meet a wide coverage requirement, network coverage needs to be provided in some remote areas, but fiber deployment is difficult and costly. Therefore, a flexible and convenient access and backhaul solution also needs to be designed. An integrated access and backhaul (integrated access and backhaul, IAB) technology provides a solution to the foregoing problems.

In a multi-hop IAB scenario, service data can be forwarded hop by hop only through a single path. Therefore, service transmission performance is limited by a link with worst signal quality among multi-hop links. In other words, if performance of any hop of link among the multi-hop links is poor, the entire end-to-end transmission performance is affected. Especially when an IAB node moves, signal strength is severely attenuated.

### SUMMARY

Embodiments of this application provide a data transmission method, to implement multicast transmission in an integrated access and backhaul (integrated access and backhaul, IAB) multi-hop scenario.

According to a first aspect, a data transmission method is provided. The method may be performed by a first IAB node, or may be performed by a component (for example, a chip or a circuit) of the first IAB node. This is not limited herein.

The method includes: The first IAB node receives a first data packet; and the first IAB node sends a second data packet to a plurality of second IAB nodes through multicast, where the second data packet is determined based on the first data packet, and the plurality of second IAB nodes are next-hop nodes of the first IAB node.

Based on the foregoing technical solution, after the first IAB node receives the first data packet, if a next-hop node of the first IAB node includes the plurality of second IAB nodes, the first IAB node may send a data packet to the plurality of second IAB nodes through multicast, to implement multicast transmission in a multi-hop IAB scenario.

When a data packet is transmitted in a multicast mode, normal transmission of the data packet can be ensured provided that channel quality of at least one link in a plurality of links is good. Compared with a manner of transmitting a data packet in a unicast mode, using the multicast mode is more conducive to successfully transmitting a data packet, thereby improving transmission performance in the multi-hop IAB scenario.

For example, the first data packet is a backhaul adaptation protocol (backhaul adaptation protocol, BAP) service data unit (service data unit, SDU), and the second data packet is a BAP protocol data unit (protocol data unit, PDU).

For example, if the first IAB node is an access IAB node, the first data packet is an uplink data packet. That the first IAB node receives the first data packet includes: The first IAB node receives the first data packet from an upper-layer entity via a BAP entity.

For example, if the first IAB node is an intermediate IAB node, the first data packet is an uplink data packet or a downlink data packet. That the first IAB node receives the first data packet includes: The first IAB node receives the first data packet from a fourth IAB node, where the fourth IAB node is a prior-hop IAB node of the first IAB node.

For example, if the first IAB node is a donor IAB node, the first data packet is a downlink data packet. That the first IAB node receives the first data packet includes: The first IAB node receives the first data packet from an upper-layer entity via a BAP entity.

The second data packet is determined based on the first data packet. For example, if the first IAB node is an intermediate IAB node, and the first data packet includes a first BAP routing identifier, the second data packet is the same as the first data packet. Alternatively, if the first IAB node is an intermediate IAB node, and the first data packet includes a second BAP routing identifier, the first IAB node replaces the second BAP routing identifier included in the first data packet with a first BAP routing identifier, to generate the second data packet. Alternatively, if the first IAB node is an access IAB node or a donor IAB node, after determining a first BAP routing identifier, the first IAB node adds the first BAP routing identifier to a BAP header of the first data packet, to generate the second data packet.

In a possible implementation, that the first IAB node sends the second data packet to the plurality of second IAB nodes through multicast includes: The first IAB node sends the second data packet to the plurality of second IAB nodes through multicast based on a first BAP address, where the first BAP address is determined based on first configuration information and a first BAP routing identifier corresponding to the first data packet, the first BAP address corresponds to the plurality of second IAB nodes, the first BAP routing identifier indicates the destination node of the first data packet and a path for transmitting the first data packet, and the first configuration information indicates an association relationship between the first BAP routing identifier and the first BAP address.

Based on the foregoing technical solution, the first IAB node may determine, based on the first BAP address, the plurality of second IAB nodes configured to receive the second data packet, to ensure correct data packet transmission, and prevent the first IAB node from sending the second data packet to an IAB node other than the second IAB node, thereby reducing resource consumption.

For example, if the first configuration information does not indicate an association relationship between the first BAP routing identifier and a second BAP address, the first BAP routing identifier corresponds to a multicast mode. The second BAP address corresponds to a third IAB node, and the third IAB node is a next-hop node of the first IAB node. In this case, the first IAB node may determine, based on an information element (information element, IE) that carries the first configuration information, that the first BAP routing identifier corresponds to the multicast mode.

With reference to the first aspect, in some implementations of the first aspect, the first configuration information further indicates an association relationship between the first BAP routing identifier and a second BAP address, the second BAP address corresponds to a third IAB node, and the third IAB node is a next-hop node of the first IAB node. That the first IAB node sends the second data packet to the plurality of second IAB nodes through multicast includes: The first IAB node sends the second data packet to the plurality of second IAB nodes through multicast based on indication information, where the indication information indicates to send the first data packet through multicast.

Based on the foregoing technical solution, the first BAP address corresponding to the plurality of second IAB nodes may be added to a routing table corresponding to an existing unicast mode, to obtain the first configuration information. That is, based on the foregoing technical solution, a routing table corresponding to the multicast mode may be configured for the first IAB node when a small change is made to an existing protocol.

It may be understood that, when the first BAP routing identifier is associated with the first BAP address and the second BAP address, the first BAP routing identifier corresponds to both the multicast mode and the unicast mode.

A manner in which the first IAB node obtains the indication information is not limited in this embodiment of this application.

For example, if the first data packet further includes the indication information, the first IAB node may obtain the indication information from the first data packet.

For example, the indication information may be carried in a BAP header of the first data packet.

For example, the first IAB node may receive the indication information from a donor IAB node.

For example, the first IAB node may receive the indication information from the donor node by using a radio resource control (radio resource control, RRC) message or an F1 application protocol (F1 application protocol, F1AP) message.

With reference to the first aspect, in some implementations of the first aspect, the first configuration information further indicates an association relationship between the first BAP routing identifier and a second BAP address, the second BAP address corresponds to a third IAB node, and the third IAB node is a next-hop node of the first IAB node. That the first IAB node sends the second data packet to the plurality of second IAB nodes through multicast includes: When determining that a link between the first IAB node and the third IAB node is unavailable, the first IAB node sends the second data packet to the plurality of second IAB nodes through multicast.

Based on the foregoing technical solution, when the first BAP routing identifier is associated with the first BAP address and the second BAP address, the first IAB node may determine, depending on that the link between the first IAB node and the third IAB node is unavailable, to send the second data packet in the multicast mode, to implement multicast transmission in the multi-hop IAB scenario, and avoid a data packet transmission failure caused when the first IAB node sends the second data packet to the third IAB node.

With reference to the first aspect, in some implementations of the first aspect, the first data packet includes a second BAP routing identifier of the first data packet, the second BAP routing identifier corresponds to a unicast mode, and the second BAP routing identifier indicates the destination node of the first data packet and a path for transmitting the first data packet. The method further includes: The first IAB node determines a second BAP address based on the second BAP routing identifier and second configuration information, where the second BAP address corresponds to a third IAB node, and the second configuration information indicates an association relationship between the second BAP routing identifier and the second BAP address; the first IAB node determines that a link between the first IAB node and the third IAB node is unavailable; and the first IAB node determines the first BAP routing identifier based on the destination node indicated by the second BAP routing identifier. Before sending, by the first IAB node, the second data packet to the plurality of second IAB nodes through multicast, the method further includes: The first IAB node replaces the second BAP routing identifier included in the first data packet with the first BAP routing identifier, to generate the second data packet.

Based on the foregoing technical solution, when the first data packet includes the second BAP routing identifier corresponding to the unicast mode, the first IAB node may determine, based on that the link between the first IAB node and the third IAB node is unavailable, to send the second data packet in the multicast mode, so that switching from the unicast mode to the multicast mode can be implemented.

It may be understood that the first IAB node may determine, based on a value of the first BAP routing identifier, that the first BAP routing identifier corresponds to the multicast mode, and determine, based on a value of the second BAP routing identifier, that the second BAP routing identifier corresponds to the unicast mode. Alternatively, the first IAB node may determine, based on an IE that carries the first configuration information, that the first BAP routing identifier corresponds to the multicast mode, and determine, based on the IE that carries the second configuration information, that the second BAP routing identifier corresponds to the unicast mode.

With reference to the first aspect, in some implementations of the first aspect, the method further includes: The first IAB node determines an identifier of a first channel based on third configuration information, where the third configuration information indicates an association relationship between an identifier of a first link and first information, the identifier of the first link indicates links between the first IAB node and the plurality of second IAB nodes, and the first information includes the identifier of the first channel. That the first IAB node sends the second data packet to the plurality of second IAB nodes through multicast includes: The first IAB node sends the second data packet to the plurality of second IAB nodes on the first channel through multicast.

Based on the foregoing technical solution, the first IAB node may determine, based on the third configuration information, the identifier of the first channel corresponding to the multicast mode.

Optionally, the first information further includes one or more of the following: an identifier of a second link, an identifier of a second channel, a service type identifier, a destination IP address of the first data packet, a flow label corresponding to the first data packet, and a differentiated services code point configuration corresponding to the first data packet; the second link is a link used by the first IAB node to receive the first data packet, the second channel is a channel used by the first IAB node to receive the first data packet, and the service type identifier is for identifying a service type of the first data packet.

For example, if the first IAB node is an intermediate IAB node, the first information further includes the identifier of the second link and the identifier of the second channel.

Based on the foregoing technical solution, different channels may be configured for data packets received on different links and/or different channels. When different channels are configured for different data packets, transmission quality of service (quality of service, QoS) requirements of the different data packets can be met by using the different channels.

For example, if the first IAB node is an access IAB node, the first information further includes a service type identifier.

Based on the foregoing technical solution, different channels may be configured for different services. When different channels are configured for different services, transmission QoS requirements of the different services can be met by using the different channels.

For example, if the first IAB node is a donor IAB node, the first information further includes a destination IP address, a flow label, and a differentiated services code point configuration.

Based on the foregoing technical solution, different channels may be configured for data packets sent to different destination IP addresses and/or data packets corresponding to different traffic. When different channels are configured for different data packets, transmission QoS requirements of the different data packets can be met by using the different channels.

With reference to the first aspect, in some implementations of the first aspect, the first IAB node is an intermediate IAB node. Before sending, by the first IAB node, the second data packet to the plurality of second IAB nodes through multicast, the method further includes: The first IAB node determines that a packet identifier corresponding to the first data packet is different from packet identifiers corresponding to other data packets in a receive window, where the packet identifier includes a BAP packet identifier.

Based on the foregoing technical solution, the first IAB node may determine, based on the packet identifier of the first data packet, that the first data packet is different from a data packet previously received by the first IAB node, so that the first IAB node can be prevented from repeatedly processing a same data packet, and a resource waste can be avoided.

In a possible implementation, before sending the second data packet, the first IAB node first determines the first BAP address based on the first BAP routing identifier and the first configuration information. In this case, before the first IAB node determines the first BAP address based on the first BAP routing identifier and the first configuration information, the first IAB node determines that the packet identifier corresponding to the first data packet is different from the packet identifiers corresponding to the other data packets in the receive window.

With reference to the first aspect, in some implementations of the first aspect, the first IAB node is an intermediate IAB node. Before sending, by the first IAB node, the second data packet to the plurality of second IAB nodes through multicast, the method further includes: The first IAB node determines that a packet identifier corresponding to the first data packet is different from N packet identifiers buffered by the first IAB node, where the N packet identifiers correspond to N data packets received by the first IAB node before receiving the first data packet, the packet identifier includes a BAP packet identifier, and N is a positive integer.

Based on the foregoing technical solution, the first IAB node may determine, based on the packet identifier of the first data packet, that the first data packet is different from a data packet previously received by the first IAB node, so that the first IAB node can be prevented from repeatedly processing a same data packet, and a resource waste can be avoided.

For example, the N data packets are data packets that have different packet identifiers in W data packets received by the first IAB node before the first data packet is received, where W is an integer greater than or equal to N.

In a possible implementation, before sending the second data packet, the first IAB node first determines the first BAP address based on the first BAP routing identifier and the first configuration information. In this case, before the first IAB node determines the first BAP address based on the first BAP routing identifier and the first configuration information, the first IAB node determines that the packet identifier corresponding to the first data packet is different from the N packet identifiers buffered by the first IAB node.

With reference to the first aspect, in some implementations of the first aspect, the method further includes: If N<M, the first IAB node buffers the packet identifier corresponding to the first data packet; or if N=M, the first IAB node deletes a first buffered packet identifier in the N packet identifiers, and buffers the packet identifier corresponding to the first data packet, where M is a maximum quantity of packet identifiers for which buffering is supported by the first IAB node.

Optionally, the packet identifier further includes a BAP routing identifier of a data packet and/or a BAP address of a source node of the data packet, and the BAP routing identifier of the data packet indicates a destination node of the data packet and a path for transmitting the data packet.

Because different access IAB nodes may allocate a same BAP packet identifier to data packets, to prevent the first IAB node from determining actually different data packets as a same data packet, the first IAB node may further determine, based on BAP routing identifiers of the data packets and a BAP address of a source node, whether the data packets are the same.

With reference to the first aspect, in some implementations of the first aspect, the first IAB node is an access IAB node, the first data packet is an uplink data packet, and the method further includes: The first IAB node determines the first BAP routing identifier based on fourth configuration information, where the first BAP routing identifier is for determining the first BAP address corresponding to the plurality of second IAB nodes, and the fourth configuration information indicates the first BAP routing identifier corresponding to the multicast mode.

For example, the first BAP routing identifier determined based on the fourth configuration information may be considered as a default routing identifier (default routing ID) corresponding to the multicast mode.

With reference to the first aspect, in some implementations of the first aspect, the first IAB node is an access IAB node, the first data packet is an uplink data packet, and the method further includes: The first IAB node determines the first BAP routing identifier based on fifth configuration information, where the first BAP routing identifier is for determining the first BAP address corresponding to the plurality of second IAB nodes, the fifth configuration information indicates an association relationship between the first BAP routing identifier and the service type identifier, and indicates an association relationship between the second BAP routing identifier and the service type identifier, the second BAP routing identifier indicates the destination node of the first data packet and the path for transmitting the first data packet, and the service type identifier is for identifying the service type of the first data packet.

For example, the fifth configuration information may be referred to as an uplink traffic to routing identifier mapping configuration table.

It should be understood that, when the fifth configuration information includes the first BAP routing identifier and the second BAP routing identifier, the first IAB node may determine, based on values of the first BAP routing identifier and the second BAP routing identifier, that the first BAP routing identifier corresponds to the multicast mode, and determine that the second BAP routing identifier corresponds to the unicast mode.

With reference to the first aspect, in some implementations of the first aspect, the first IAB node is a donor IAB node, the first data packet is a downlink data packet, and the method further includes: The first IAB node determines the first BAP routing identifier based on sixth configuration information, where the first BAP routing identifier is for determining the first BAP address corresponding to the plurality of second IAB nodes, the sixth configuration information indicates an association relationship between the first BAP routing identifier and second information, and indicates an association relationship between the second BAP routing identifier and the second information, the second BAP routing identifier indicates the destination node of the first data packet and the path for transmitting the first data packet, and the second information includes the destination IP address of the first data packet.

For example, the sixth configuration information may be referred to as a downlink traffic to routing identifier mapping configuration table.

It should be understood that, when the sixth configuration information includes the first BAP routing identifier and the second BAP routing identifier, the first IAB node may determine, based on values of the first BAP routing identifier and the second BAP routing identifier, that the first BAP routing identifier corresponds to the multicast mode, and determine that the second BAP routing identifier corresponds to the unicast mode.

According to a second aspect, a data transmission method is provided. The method may be performed by a first IAB node, or may be performed by a component (for example, a chip or a circuit) of the first IAB node. This is not limited herein.

The method includes: The first IAB node receives a first data packet, where the first data packet includes a first BAP routing identifier, and the first BAP routing identifier indicates the destination node of the first data packet and a path for transmitting the first data packet; when the first IAB node determines that links between the first IAB node and a plurality of second IAB nodes are unavailable, the first IAB node determines a second BAP routing identifier based on the destination node indicated by the first BAP routing identifier, where the second BAP routing identifier indicates the destination node and a path for transmitting the first data packet, the plurality of second IAB nodes are next-hop nodes of the first IAB node, and the plurality of second IAB nodes correspond to the first BAP routing identifier; the first IAB node replaces the first BAP routing identifier included in the first data packet with the second BAP routing identifier, to generate a second data packet; and the first IAB node sends the second data packet to a third IAB node, where the third IAB node is a next-hop node of the first IAB node, and the third IAB node corresponds to the second BAP routing identifier.

Based on the foregoing technical solution, when the first data packet includes the first BAP routing identifier corresponding to the multicast mode, the first IAB node may determine, based on that the links between the first IAB node and the plurality of second IAB nodes are unavailable, to send the second data packet in a unicast mode, so that switching from the multicast mode to the unicast mode can be implemented.

For example, that the plurality of second IAB nodes correspond to the first BAP routing identifier means that a first BAP address may be determined based on the first BAP routing identifier and first configuration information, and the first BAP address corresponds to the plurality of second IAB nodes. The first configuration information indicates an association relationship between the first BAP routing identifier and the first BAP address.

For example, that the third IAB node corresponds to the second BAP routing identifier means that a second BAP address may be determined based on the second BAP routing identifier and second configuration information, and the second BAP address corresponds to the third IAB node. The second configuration information indicates an association relationship between the second BAP routing identifier and the second BAP address.

With reference to the second aspect, in some implementations of the second aspect, the method further includes: When one or more of the following conditions are met, the first IAB node determines that the links between the first IAB node and the plurality of second IAB nodes are unavailable: channel quality of a link between the first IAB node and at least one second IAB node in the plurality of second IAB nodes is lower than a channel quality threshold, a radio link failure occurs on a link between the first IAB node and at least one second IAB node in the plurality of second IAB nodes, or a beam failure occurs on a link between the first IAB node and at least one second IAB node in the plurality of second IAB nodes.

According to a third aspect, a communication apparatus is provided. The communication apparatus has a function of implementing the method according to any one of the first aspect or the possible implementations of the first aspect, or the communication apparatus has a function of implementing the method according to any one of the second aspect or the possible implementations of the second aspect. The function may be implemented by hardware, or may be implemented by hardware executing corresponding software. The hardware or the software includes one or more units corresponding to the functions.

According to a fourth aspect, a communication apparatus is provided, and includes a processor and a memory. Optionally, the communication apparatus may further include a transceiver. The memory is configured to store a computer program, and the processor is configured to: invoke and run the computer program stored in the memory, and control the transceiver to receive and send a signal, to enable the communication apparatus to perform the method according to any one of the first aspect or the possible implementations of the first aspect, or enable the communication apparatus to perform the method according to any one of the second aspect or the possible implementations of the second aspect.

According to a fifth aspect, a communication apparatus is provided, and includes a processor and a communication interface. The communication interface is configured to receive data and/or information, and transmit the received data and/or information to the processor. The processor processes the data and/or the information, and the communication interface is further configured to output data and/or information processed by the processor, so that the method according to any one of the first aspect or the possible implementations of the first aspect is performed, or so that the method according to any one of the second aspect or the possible implementations of the second aspect is performed.

According to a sixth aspect, a computer-readable storage medium is provided. The computer-readable storage medium stores computer instructions. When the computer instructions are run on a computer, the method according to any one of the first aspect, the second aspect, or the possible implementations of the aspects is performed.

According to a seventh aspect, a computer program product is provided. The computer program product includes computer program code. When the computer program code is run on a computer, the method according to any one of the first aspect, the second aspect, or the possible implementations of the aspects is performed.

According to an eighth aspect, a communication system is provided. The communication system includes at least one IAB node, the at least one IAB node includes a first IAB node, and the first IAB node is configured to perform the method according to any one of the first aspect or the possible implementations of the first aspect, or the first IAB node is configured to perform the method according to any one of the second aspect or the possible implementations of the second aspect.

Optionally, the at least one IAB node further includes a plurality of second IAB nodes, and the plurality of second IAB nodes are configured to receive a data packet from the first IAB node.

Optionally, the at least one IAB node further includes a third IAB node, and the third IAB node is configured to receive a data packet from the first IAB node.

### BRIEF DESCRIPTION OF DRAWINGS

FIG. 1 is a diagram of an IAB network topology;
FIG. 2 is a diagram of composition of an IAB node;
FIG. 3 is a diagram of a CU-DU architecture;
FIG. 4 shows an example of a protocol stack architecture of an IAB network;
FIG. 5 shows another example of a protocol stack architecture of an IAB network;
FIG. 6 is a diagram of a structure of a BAP data packet;
FIG. 7 is a diagram of a multicast mode and a unicast mode according to an embodiment of this application;
FIG. 8 is a schematic flowchart of a data transmission method according to an embodiment of this application;
FIG. 9 is a diagram of data transmission in a multi-hop IAB scenario;
FIG. 10 is a diagram of a structure of a BAP data packet according to an embodiment of this application;
FIG. 11 is a schematic flowchart of a data transmission method according to another embodiment of this application;
FIG. 12 is a block diagram of a communication apparatus according to this application;
FIG. 13 is a diagram of a structure of a communication apparatus according to this application; and
FIG. 14 is a diagram of a chip system according to an embodiment of this application.

### DESCRIPTION OF EMBODIMENTS

The following describes technical solutions of this application with reference to accompanying drawings.

The technical solutions in embodiments of this application may be applied to various communication systems, including but not limited to a 6th generation (6th generation, 6G) mobile communication system, a 5th generation (the 5th generation, 5G) system or a new radio (new radio, NR) system, a long term evolution (long term evolution, LTE) system, an LTE frequency division duplex (frequency division duplex, FDD) system, an LTE time division duplex (time division duplex, TDD) system, and the like. The technical solutions provided in this application may be further applied to a future communication system, and may be further applied to device-to-device (device-to-device, D2D) communication, vehicle-to-everything (vehicle-to-everything, V2X) communication, machine-to-machine (machine-to-machine, M2M) communication, machine type communication (machine type communication, MTC), an internet of things (internet of things, IoT) communication system, or other communication systems.

The system architecture and the service scenario described in embodiments of this application are intended to describe the technical solutions in embodiments of this application more clearly, and do not constitute a limitation on the technical solutions provided in embodiments of this application. A person of ordinary skill in the art may know that: With the evolution of the network architecture and the emergence of new service scenarios, the technical solutions provided in embodiments of this application are also applicable to similar technical problems. In embodiments of this application, an example in which a provided method is applied to an NR system or a 5G network is used for description.

A terminal device (terminal equipment) in embodiments of this application may be an uncrewed aerial vehicle (uncrewed aerial vehicle, UAV), an access terminal, a subscriber unit, a subscriber station, a mobile station, a relay station, a remote station, a remote terminal, a mobile device, a user terminal (user terminal), user equipment (user equipment, UE), a terminal (terminal), a wireless communication device, a user agent, or a user apparatus. The terminal device may alternatively be a cellular phone, a cordless phone, a session initiation protocol (session initiation protocol, SIP) phone, a wireless local loop (wireless local loop, WLL) station, a personal digital assistant (personal digital assistant, PDA), a handheld device having a wireless communication function, a computing device, another processing device connected to a wireless modem, a vehicle-mounted device, a wearable device, a terminal device in a 5G network, a terminal device in a future evolved public land mobile network (public land mobile network, PLMN), a terminal device in a future internet of vehicles, or the like. This is not limited in embodiments of this application. In embodiments of this application, the terminal device (terminal for short) is used for description.

A base station in embodiments of this application may be any communication device that has a wireless transceiver function and that is configured to communicate with the terminal device. The base station includes but is not limited to an evolved NodeB (evolved NodeB, eNB), a radio network controller (radio network controller, RNC), a NodeB (NodeB, NB), a base station controller (base station controller, BSC), a base transceiver station (base transceiver station, BTS), a home base station (home evolved NodeB, HeNB, or home NodeB, HNB), a baseband unit (baseband unit, BBU), an access point (access point, AP) in a wireless fidelity (wireless fidelity, Wi-Fi) system, a wireless relay node, a wireless backhaul node, a transmission point (transmission point, TP), a transmission and reception point (transmission and reception point, TRP), or the like; may be a gNB or a transmission point (TRP or TP) in a 5G system such as an NR system; may be an antenna panel or a group of antenna panels (including a plurality of antenna panels) of a base station in a 5G system; or may be a network node, such as a baseband unit (BBU) or a distributed unit (distributed unit, DU), that constitutes a gNB or a transmission point.

With development of technologies such as virtual reality (virtual reality, VR), augmented reality (augmented reality, AR), and the internet of things, there will be more terminals in a future network, and usage of network data will also continuously increase. To adapt to the increasing quantity of terminals and the rapidly increasing usage of network data in the market, higher requirements are imposed on the capacity of a 5G network. In a hotspot area, to meet a 5G ultra-high capacity requirement, using high-frequency small cells for networking becomes more popular. A high-frequency carrier has a poor propagation characteristic, is severely attenuated due to blocking. Therefore, a large quantity of small cells need to be densely deployed in the hotspot area. These small cells may be integrated access and backhaul (integrated access and backhaul, IAB) nodes.

To design a flexible and convenient access and backhaul solution, a wireless transmission solution is used for both an access link (access link, AL) and a backhaul link (backhaul link, BL) in an IAB scenario.

In a network including an IAB node (referred to as an IAB network for short below), the IAB node may provide a wireless access service for a terminal device, and is connected to a donor node (donor node) via a wireless backhaul link for transmission of service data of a user. For example, the donor node may be a donor base station. In a 5G network, the donor base station may be referred to as an IAB donor (IAB donor) or a donor next-generation node base station (donor next generation node base station, DgNB) for short. The donor node may be a complete entity, or may be in a form in which a central unit (central unit, CU) and a distributed unit (distributed unit, DU) are separated. In other words, the donor node includes a donor CU (donor-CU) and a donor DU (donor-DU).

The donor-CU may be in a form in which a user plane (user plane, UP) and a control plane (control plane, CP) are separated. In other words, the donor-CU includes a CU-UP and a CU-CP.

The IAB node is connected to a core network via the donor node through a wired link. For example, in a 5G standalone architecture, an IAB node is connected to a core network (5G core, 5GC) of a 5G network via a donor node through a wired link. In a 5G non-standalone architecture, an IAB node is connected to an evolved packet core (evolved packet core, EPC) via an eNB on a control plane, and is connected to the EPC via a donor node and an eNB on a user plane.

To ensure service transmission reliability, an IAB network supports multi-hop IAB node networking and multi-connectivity IAB node networking. Therefore, there may be a plurality of transmission paths between the donor node and an IAB node. On a path, there is a determined hierarchical relationship between IAB nodes, and between an IAB node and a donor node served by the IAB node. Each IAB node considers, as a parent node, a node providing a backhaul service for the IAB node. Correspondingly, each IAB node may be considered as a child node of a parent node of the IAB node, or a downstream (lower-level) node that is far away from a donor node of an IAB node and adjacent to the IAB node is referred to as a child node of the IAB node.

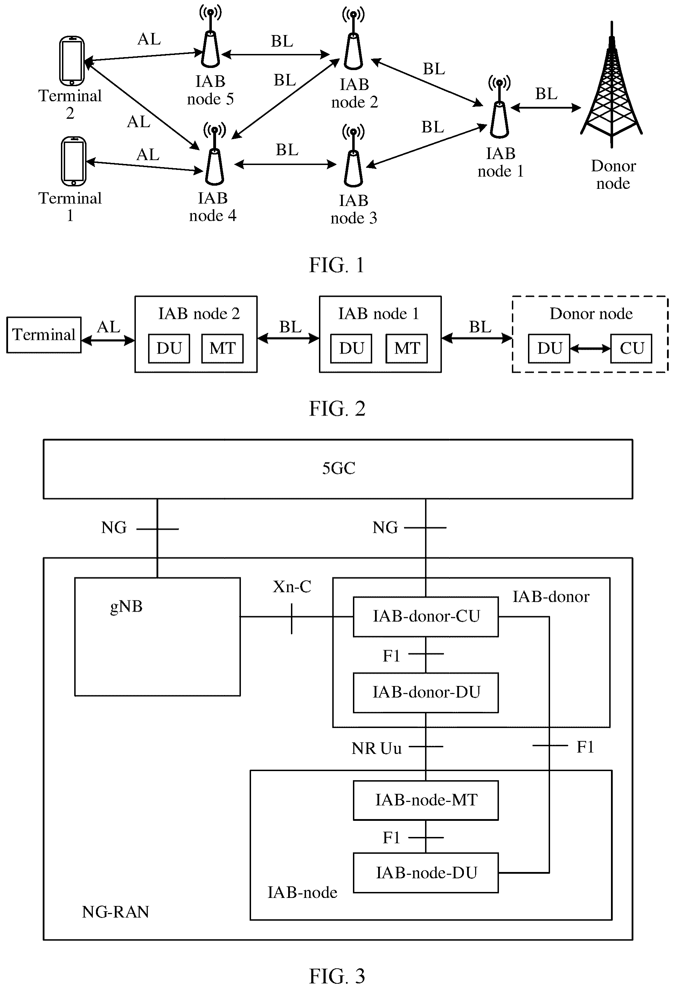

For example, refer to FIG. 1. A parent node of an IAB node 1 is a donor node, the IAB node 1 is a parent node of an IAB node 2 and an IAB node 3, both the IAB node 2 and the IAB node 3 are parent nodes of an IAB node 4, and a parent node of an IAB node 5 is the IAB node 2.

In the network architecture shown in FIG. 1, an uplink data packet of a terminal may be transmitted to a donor node via one or more IAB nodes, and then sent by the donor node to a mobile gateway device (for example, a user plane function (user plane function, UPF) network element in a 5G network). After being received by the donor node from the mobile gateway device, a downlink data packet is sent to the terminal via one or more IAB nodes. For example, in FIG. 1, there are two available paths for data packet transmission between a terminal 1 and the donor node: the terminal 1→the IAB node 4→the IAB node 3→the IAB node 1→the donor node, and the terminal 1→the IAB node 4→the IAB node 2→the IAB node 1→the donor node. There are three available paths for data packet transmission between a terminal 2 and the donor node: the terminal 2→the IAB node 4→the IAB node 3→the IAB node 1→the donor node, the terminal 2→the IAB node 4→the IAB node 2→the IAB node 1→the donor node, and the terminal 2→the IAB node 5→the IAB node 2→the IAB node 1→the donor node.

It may be understood that, in the IAB network, one transmission path between the terminal and the donor node may include one or more IAB nodes. Each IAB node needs to maintain a wireless backhaul link (parent link) oriented to a parent node, and further needs to maintain a wireless link (sublink) between the IAB node and a child node. If one IAB node is a node accessed by a terminal, a radio access link exists between the IAB node and a child node (namely, the terminal). If one IAB node is a node that provides a backhaul service for another IAB node, a wireless backhaul link exists between the IAB node and a child node (namely, the another IAB node). For example, refer to FIG. 1. In the path "the terminal 1→the IAB node 4→the IAB node 3→the IAB node 1→the donor node", the terminal 1 accesses the IAB node 4 through a radio access link, the IAB node 4 accesses the IAB node 3 through a wireless backhaul link, the IAB node 3 accesses the IAB node 1 through a wireless backhaul link, and the IAB node 1 accesses the donor node through a wireless backhaul link.

For example, the IAB node may be customer premises equipment (customer premises equipment, CPE) or a residential gateway (residential gateway, RG). In this case, the method provided in embodiments of this application may be further applied to a home access (home access) scenario.

The IAB networking scenario shown in FIG. 1 is merely an example. In the IAB scenario combining multi-hop and multi-connectivity, there are more other possibilities in the IAB networking scenario. For example, a donor node and an IAB node under another donor node form dual connectivity to serve a terminal. Details are not enumerated herein.

For ease of understanding of embodiments of this application, concepts in embodiments of this application are first described briefly. It should be understood that basic concepts described below are briefly described by using a basic concept specified in an NR protocol as an example, but embodiments of this application are not limited to being applied only to an NR system. Therefore, standard names appearing when the NR system is used as an example for description are all functional descriptions, and specific names are not limited, and may be correspondingly extended to another system, for example, a 2G, 3G, 4G, or future communication system.

### 1. Basic concept

A link is a path between two neighboring nodes on a path.

An access link is a link between a terminal device and a base station, a link between a terminal device and an IAB node, a link between a terminal device and a donor node, or a link between a terminal device and a donor-DU. Alternatively, the access link includes a wireless link used when an IAB node serves as a common terminal device to communicate with a parent node of the IAB node. When serving as the common terminal device, the IAB node does not provide a backhaul service for any child node. The access link includes an uplink access link and a downlink access link. In this application, an access link of a terminal device is a wireless link. Therefore, the access link may also be referred to as a radio access link.

A backhaul link is a link between an IAB node and a parent node when the IAB node serves as a wireless backhaul node. When serving as the wireless backhaul node, the IAB node provides a wireless backhaul service for a child node. The backhaul link includes an uplink backhaul link, a downlink backhaul link, or an uplink backhaul link and a downlink backhaul link. In this application, a backhaul link between an IAB node and a parent node is a wireless link. Therefore, the backhaul link may also be referred to as a wireless backhaul link.

Parent node and child node: Each IAB node considers a neighboring node that provides a wireless access service and/or a wireless backhaul service for the IAB node as a parent node (parent node). Correspondingly, each IAB node may be considered as a child node (child node) of the parent node of the IAB node. Alternatively, the child node may also be referred to as a lower-level node, and the parent node may also be referred to as an upper-level node.

A prior-hop node of a node is a node that is on a path including the node and that last receives data (or referred to as a data packet) before the node. It may be understood that the prior-hop node of the node may include a prior-hop node of the node in uplink transmission, a prior-hop node of the node in downlink transmission, or a prior-hop node of the node in uplink transmission and a prior-hop node of the node in downlink transmission.

A next-hop node of a node is a node that is on a path including the node and that first receives a data packet after the node. It may be understood that the next-hop node of the node includes a next-hop node of the node in uplink transmission, a next-hop node of the node in downlink transmission, or a next-hop node of the node in uplink transmission and a next-hop node of the node in downlink transmission.

An ingress link of a node is a link between the node and a prior-hop node of the node, and may also be referred to as a prior-hop link of the node. It may be understood that the ingress link of the node may include an ingress link of the node in uplink transmission, an ingress link of the node in downlink transmission, or an ingress link of the node in uplink transmission and an ingress link of the node in downlink transmission.

An egress (egress) link of a node is a link between the node and a next-hop node of the node, and may also be referred to as a next-hop link of the node. It may be understood that the egress link of the node may include an egress link of the node in uplink transmission, an egress link of the node in downlink transmission, or an egress link of the node in uplink transmission and an egress link of the node in downlink transmission.

For example, a channel involved in the ingress link and the egress link may be referred to as a backhaul radio link control channel (backhaul radio link control channel, BH RLC CH).

An access IAB node is an IAB node accessed by a terminal device, or an IAB node that provides an access service for the terminal device. It should be noted that an IAB node is an access IAB node for a terminal device that accesses the IAB node, and is an intermediate IAB node for a terminal device that accesses another IAB node. Therefore, whether an IAB node is specifically an access IAB node or an intermediate IAB node is not fixed and needs to be determined based on a specific application scenario.

An intermediate IAB node is an IAB node that provides a wireless backhaul service for another IAB node (for example, an IAB node on a path between an access IAB node and a donor node).

### 2. Composition of an IAB node

The IAB node may play a role of a mobile terminal (mobile terminal, MT) and a role of a DU. When the IAB node is oriented to a parent node of the IAB node, the IAB node may be considered as a terminal device. In this case, the IAB node plays the role of the MT. When the IAB node is oriented to a child node of the IAB node (where the child node may be a terminal device or an MT part of another IAB node), the IAB node may be considered as a network device. In this case, the IAB node plays the role of the DU. Therefore, it may be considered that the IAB node includes an MT part and a DU part, and the MT part and the DU part may be integrated into one device, or the MT part and the DU part may be independently deployed devices. An IAB node may establish a backhaul connection to at least one parent node of the IAB node through an MT part. A DU part of an IAB node may provide an access service for a terminal device or an MT part of another IAB node.

Refer to FIG. 2. A terminal device is connected to a donor node via an IAB node 2 and an IAB node 1. The IAB node 1 and the IAB node 2 both include a DU part and an MT part. The DU part of the IAB node 2 provides an access service for the terminal. The DU part of the IAB node 1 provides an access service for the MT part of the IAB node 2. A DU of the donor node provides an access service for the MT part of the IAB node 1.

### 3. IAB network architecture, protocol stack architecture, and backhaul adaptation protocol (backhaul adaptation protocol, BAP) layer

As shown in FIG. 3, a DU part (that is, an IAB-node-DU shown in FIG. 3, which is collectively referred to as an IAB-DU below) of an IAB node is logically connected to an IAB-donor-CU (that is, an IAB-donor-CU shown in FIG. 3) through an F1 interface. In other words, an F1 connection in FIG. 3 is not a physical direct connection, but a logical connection. Actually, the F1 connection between the IAB-DU and the IAB-donor-CU is physically implemented by an NR Uu interface between an MT of each hop of IAB node and a DU of a parent node of the IAB node. However, because the IAB-DU can finally communicate with the IAB-donor-CU, it may be considered that an F1 interface exists logically between the IAB-DU and the IAB-donor-CU. The F1 interface supports a user plane protocol (F1-U) and a control plane protocol (F1-C). The user plane protocol includes one or more of the following protocol layers: a general packet radio service tunneling protocol user plane (general packet radio service tunneling protocol user plane, GTP-U) layer, a user datagram protocol (user datagram protocol, UDP) layer, and an internet protocol (internet protocol, IP) layer. The control plane protocol includes one or more of the following: an F1 application protocol (F1 application protocol, F1AP) layer, a stream control transport protocol (stream control transport protocol, SCTP) layer, and an IP layer.

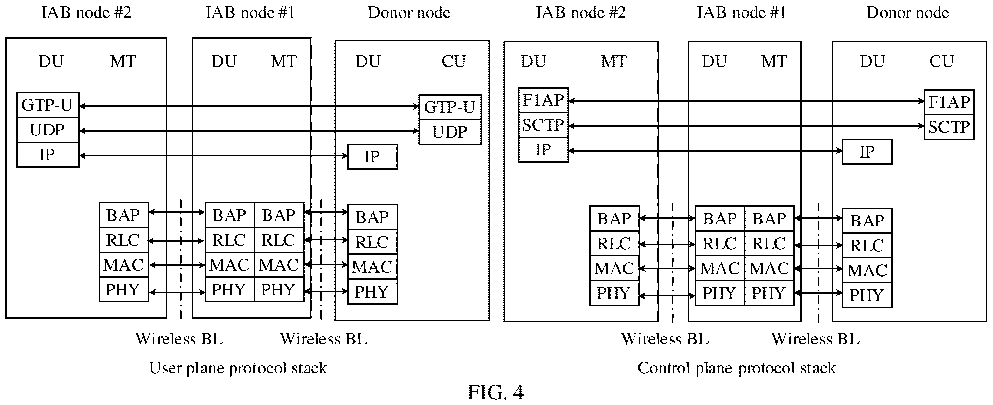

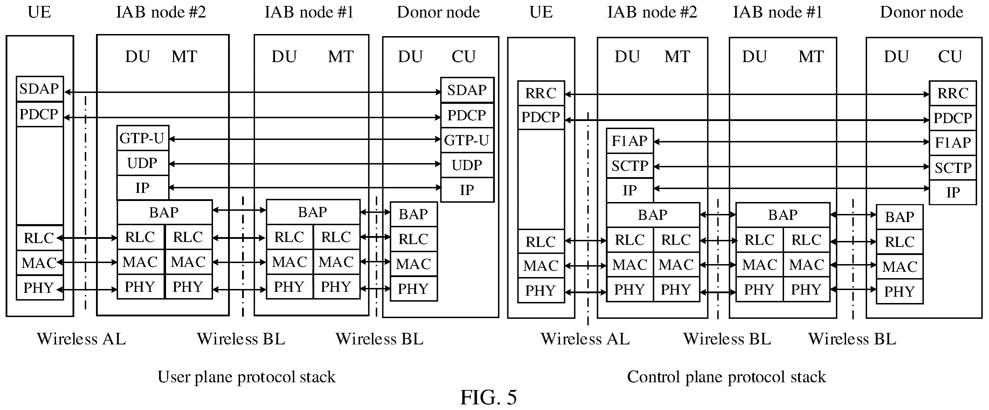

A user plane protocol stack and a control plane protocol stack in an IAB network are shown in FIG. 4 and FIG. 5. According to F1-U, functions such as user plane data transmission and downlink transmission status feedback may be performed between a donor node and an IAB node. According to F1-C, interface management, IAB-DU management, UE context related configuration, and the like may be performed between the IAB node and the donor node.

As shown in FIG. 4 and FIG. 5, the user plane protocol stack and the control plane protocol stack in the IAB network include one or more of the following protocol layers: a packet data convergence protocol (packet data convergence protocol, PDCP) layer, a GTP-U layer, a UDP layer, an IP layer, a radio link control (radio link control, RLC) layer, a medium access control (medium access control, MAC) layer, a physical (physical, PHY) layer, a radio resource control (radio resource control, RRC) layer, an F1AP layer, an SCTP layer, and a BAP layer.

The BAP layer is a new protocol layer introduced by a wireless backhaul link in the IAB network. The protocol layer is located above the RLC layer, and may be for implementing functions such as routing of a data packet on the wireless backhaul link and bearer mapping (that is, RLC CH mapping). As shown in FIG. 5, a start point of the BAP layer is located at an IAB node (that is, an access IAB node) and a donor-DU that are connected to UE. A donor-CU allocates a unique BAP address to each IAB node controlled by the donor-CU and the donor-DU, so that each IAB node and the donor-DU in the network can be uniquely identified. When there are a plurality of paths, each BAP address may be associated with a plurality of path identifiers (path identifiers, path IDs).

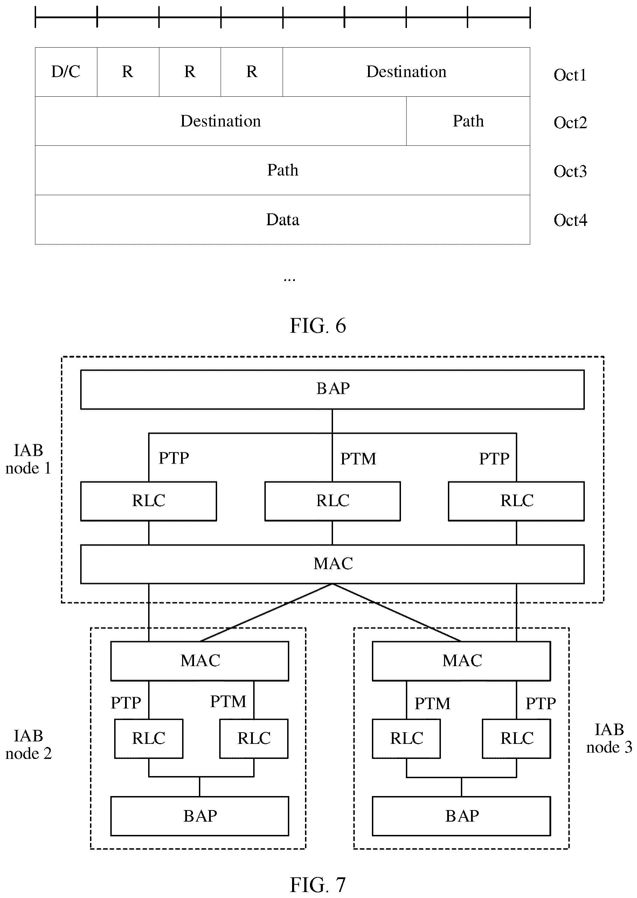

A source node (a donor-DU in a downlink transmission direction, an access IAB node in an uplink transmission direction) adds a BAP header (BAP PDU header) to a data packet at the BAP layer. A format of a BAP data (data) protocol data unit (protocol data unit) is shown in FIG. 6. The BAP data PDU includes a BAP PDU header and data. The BAP PDU header includes a 10-bit (bit) destination BAP address (BAP address) (carried in a destination (destination) field shown in FIG. 6) and a 10-bit BAP path ID (carried in a path field shown in FIG. 6), and the two are collectively referred to as a BAP routing identifier (BAP routing ID). The BAP routing ID reflects an identifier of a destination node and a path to the destination node. The BAP PDU header further includes a data/control (D/C) field, for identifying whether a BAP PDU is a data PDU or a control PDU. The BAP PDU header further includes a 3-bit reserved (reserved, R) field.

### 4. F1 interface and protocol layer of the F1 interface

The F1 interface is a logical interface between a DU part of an IAB node and a donor node (a donor-CU or a donor-DU). The F1 interface may also be referred to as an F1* interface, and supports a user plane and a control plane.

The protocol layer of the F1 interface is a communication protocol layer on the F1 interface. For example, a user plane protocol layer of the F1 interface may include one or more of an IP layer, a UDP layer, and a GTP-U layer. Optionally, the user plane protocol layer of the F1 interface further includes a PDCP layer and/or an IP security (IP Security, IPSec) layer. The control plane protocol layer of the F1 interface may include one or more of an IP layer, an F1AP layer, and an SCTP layer. Optionally, the control plane protocol layer of the F1 interface further includes one or more of a PDCP layer, an IPSec layer, and a datagram transport layer security (datagram transport layer security, DTLS) layer.

In a multi-hop IAB scenario, service data can be forwarded hop by hop only through a single path. Therefore, service transmission performance is limited by a link with worst signal quality among multi-hop links. In other words, if performance of any hop of link among the multi-hop links is poor, the entire end-to-end transmission performance is affected. Especially when an IAB node moves, signal strength is severely attenuated.

In view of this, embodiments of this application provide a data transmission method, to improve transmission performance in a multi-hop IAB scenario.

Before the data transmission method provided in embodiments of this application is described, a multicast mode and a unicast mode in embodiments of this application are first described with reference to FIG. 7.

The "multicast mode" described in embodiments of this application means that control information corresponding to a data packet is scrambled by using a group radio network temporary identifier (group radio network temporary identifier, G-RNTI). The G-RNTI may also be referred to as a broadcast RNTI (broadcast RNTI) or a multicast RNTI (multicast RNTI). Optionally, when an IAB node transmits a data packet in the "multicast mode", the data packet may be transmitted by using an RLC entity corresponding to point-to-multipoint (point to multipoint, PTM). As shown in FIG. 7, in a process in which an IAB node 1 sends a data packet to an IAB node 2 and an IAB node 3 in a multicast mode, a BAP entity of the IAB node 1 sends the data packet to an RLC entity corresponding to PTM, the RLC entity corresponding to the PTM sends the data packet to a MAC entity, and the MAC entity scrambles control information corresponding to the data packet by using a G-RNTI, and sends the data packet to a MAC entity of the IAB node 2 and a MAC entity of the IAB node 3. Correspondingly, the MAC entity of the IAB node 2 sends the received data packet to an RLC entity corresponding to PTM, and the RLC entity corresponding to the PTM sends the data packet to a BAP entity of the IAB node 2. Similarly, the MAC entity of the IAB node 3 sends the received data packet to an RLC entity corresponding to PTM, and the RLC entity corresponding to the PTM sends the data packet to a BAP entity of the IAB node 3.

The "unicast mode" described in embodiments of this application means that control information corresponding to a data packet is scrambled by using a radio network temporary identifier (radio network temporary identifier, RNTI). The RNTI may also be referred to as a unicast RNTI (unicast RNTI). Optionally, when an IAB node transmits a data packet in the "unicast mode", the data packet is transmitted by using an RLC entity corresponding to point-to-point (point to point, PTP). As shown in FIG. 7, in a process in which the IAB node 1 sends a data packet to the IAB node 2 in a unicast mode, the BAP entity of the IAB node 1 sends the data packet to the PTP RLC entity corresponding to the IAB node 2, the PTP RLC entity corresponding to the IAB node 2 sends the data packet to the MAC entity, and the MAC entity scrambles control information corresponding to the data packet by using an RNTI of the IAB node 2, and sends the data packet to the MAC entity of the IAB node 2. Correspondingly, the MAC entity of the IAB node 2 sends the received data packet to the PTP RLC entity, and the PTP RLC entity sends the data packet to the BAP entity of the IAB node 2. Similarly, the IAB node 1 may send a data packet to the IAB node 3 in a unicast mode.

It should be noted that, in FIG. 7, an example in which the IAB node 1 includes three RLC entities, and the IAB node 2 and the IAB node 3 include two RLC entities is used for description. The IAB node 1, the IAB node 2, and the IAB node 3 may further include more RLC entities. For example, the IAB node 1 may further include a PTP RLC entity corresponding to an IAB node 4 (not shown in FIG. 7). For another example, the IAB node 2 may further include a PTM RLC entity that receives a multicast data packet from the IAB node 4 (not shown in FIG. 7).

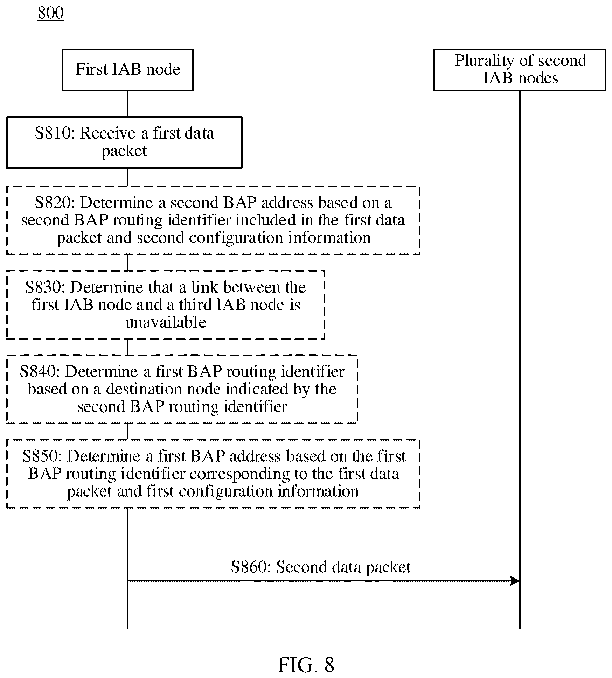

FIG. 8 is a schematic flowchart of a data transmission method according to an embodiment of this application. The method 800 shown in FIG. 8 may include the following steps.

S810: A first IAB node receives a first data packet.

For example, the first data packet is a BAP service data unit (service data unit).

For example, if the first IAB node is an access IAB node, the first data packet is an uplink data packet. That the first IAB node receives the first data packet includes: The first IAB node receives the first data packet from an upper-layer entity via a BAP entity.

For example, after receiving a data packet #1 from a terminal device, the first IAB node first removes a PHY layer header, a MAC layer header, and an RLC layer header of the data packet #1, to obtain a data packet #2 at a PDCP layer. Further, the first IAB node adds a GTP-U layer header, a UDP layer header, and an IP layer header to the data packet #2, or adds an F1AP layer header, an SCTP layer header, and an IP layer header to the data packet #2, to obtain the first data packet. Finally, that the first IAB node transfers the first data packet to the BAP entity of the first IAB node via an IP entity means that the first IAB node receives the first data packet from the upper-layer entity via the BAP entity.

For example, if the first IAB node is an intermediate IAB node, the first data packet is an uplink data packet or a downlink data packet. That the first IAB node receives the first data packet includes: The first IAB node receives the first data packet from a fourth IAB node, where the fourth IAB node is a prior-hop IAB node of the first IAB node.

For example, if the first IAB node is a donor IAB node, the first data packet is a downlink data packet. That the first IAB node receives the first data packet includes: The first IAB node receives the first data packet from an upper-layer entity via a BAP entity.

For example, after receiving a data packet #3 from a core network element, the first IAB node first processes the data packet #3 at an SDAP layer or an RRC layer, to obtain a data packet #4 at a PDCP layer. Further, the first IAB node adds a GTP-U layer header, a UDP layer header, and an IP layer header to the data packet #4, or adds an F1AP layer header, an SCTP layer header, and an IP layer header to the data packet #4, to obtain the first data packet. Finally, that the first IAB node transfers the first data packet to the BAP entity of the first IAB node via an IP entity means that the first IAB node receives the first data packet from the upper-layer entity via the BAP entity.

In an IAB network, after receiving a data packet, an IAB node usually identifies, based on a BAP routing identifier corresponding to the data packet, a next-hop IAB node corresponding to the data packet. Therefore, after receiving the first data packet, the first IAB node may first determine a first BAP routing identifier corresponding to the first data packet, and then determine a next-hop node of the first IAB node based on the first BAP routing identifier. The following separately describes a manner in which the first IAB node determines the first BAP routing identifier corresponding to the first data packet when the first IAB node is an access IAB node or a donor IAB node.

In a possible implementation, if the first IAB node is an access IAB node, the method 800 further includes: The first IAB node determines, based on fourth configuration information or fifth configuration information, the first BAP routing identifier corresponding to the first data packet.

The first BAP routing identifier indicates the destination node of the first data packet and a path for transmitting the first data packet. For example, the first BAP routing identifier is a first BAP routing ID, the first BAP routing ID includes a destination BAP address and a BAP path ID, the destination BAP address is a BAP address of the destination node of the first data packet, and the BAP path ID is for identifying the path for transmitting the first data packet.

The fourth configuration information indicates the first BAP routing identifier corresponding to a multicast mode. For example, the fourth configuration information is carried in a default uplink (uplink, UL)-BAP-RoutingID (defaultUL-BAP-RoutingID) information element (information element, IE) corresponding to the multicast mode.

The fifth configuration information indicates an association relationship between the first BAP routing identifier and a service type (for example, a service type represented by a service type identifier) of the first data packet. In other words, the fifth configuration information indicates an association relationship between the first BAP routing identifier and a service type identifier of the first data packet. The fifth configuration information may be referred to as an uplink traffic to routing ID mapping configuration table. For example, the fifth configuration information includes a backhaul information (BH information) IE, and an uplink user plane (user plane, UP) transport network layer (transport network layer, TNL) information (UL UP TNL information) IE for F1-U packets or a non-user plane traffic type (Non-UP Traffic Type) IE for non-F1-U packets. The first BAP routing identifier may be carried in a BAP routing ID IE in the BH information IE, and the service type identifier having the association relationship, that is, a correspondence, with the first BAP routing identifier may be carried in the UL UP TNL information IE for F1-U packets, or the service type identifier having the association relationship, that is, a correspondence, with the first BAP routing identifier may be carried in the non-UP traffic type IE for non-F1-U packets. If the first data packet is a data packet in which F1-U packets are encapsulated, the service type identifier of the first data packet may include a destination IP address of the first data packet and a tunnel endpoint identifier (tunnel endpoint identifier, TEID). If the first data packet is a data packet in which non-F1-U packets are encapsulated, the service type identifier of the first data packet may include a service type.

The following describes a manner in which the first IAB node determines the first BAP routing identifier based on the fourth configuration information.

For example, if the first IAB node never receives the fifth configuration information, or the first IAB node receives the fourth configuration information after receiving the fifth configuration information, the first IAB node determines, based on the fourth configuration information, the first BAP routing identifier corresponding to the first data packet.

Optionally, if the first IAB node further receives configuration information #1, and the configuration information #1 indicates a second BAP routing identifier corresponding to a unicast mode, before the first IAB node determines the first BAP routing identifier based on the fourth configuration information, the method 800 further includes: The first IAB node receives indication information from a donor IAB node, where the indication information indicates to send the first data packet through multicast.

The configuration information #1 may be carried in a default uplink (uplink, UL)-BAP-RoutingID (defaultUL-BAP-RoutingID) information element (information element, IE) corresponding to the unicast mode. It should be understood that when the first IAB node receives the fourth configuration information and the configuration information #1, the first IAB node may determine, based on a value of the first BAP routing identifier indicated by the fourth configuration information, that the first BAP routing identifier corresponds to the multicast mode, and determine, based on a value of the second BAP routing identifier indicated by the configuration information #1, that the second BAP routing identifier corresponds to the unicast mode. Alternatively, when the first IAB node receives the fourth configuration information and the configuration information #1, the first IAB node may determine, based on an IE for carrying the fourth configuration information, that the first BAP routing identifier corresponds to the multicast mode, and determine, based on an IE for carrying the configuration information #1, that the second BAP routing identifier corresponds to the unicast mode. The IE for carrying the fourth configuration information corresponds to the multicast mode, and the IE for carrying the configuration information #1 corresponds to the unicast mode.

The second BAP routing identifier indicates the destination node of the first data packet and a path for transmitting the first data packet. Optionally, the value of the second BAP routing identifier is different from the value of the first BAP routing identifier. Specifically, the path that is indicated by the first BAP routing identifier and that is for transmitting the first data packet is different from the path that is indicated by the second BAP routing identifier and that is for transmitting the first data packet. For more descriptions of the second BAP routing identifier, refer to the foregoing descriptions about the first BAP routing identifier.

For example, the indication information may be multicast indication information or unicast disable (disable) indication information. That the first IAB node receives the indication information from the donor IAB node includes: The first IAB node receives the indication information from the donor IAB node by using an RRC message or an F1AP message. If the donor IAB node is of a CU-DU separated architecture, the first IAB node receives the indication information from a CU part of the donor IAB node.

Optionally, if the first IAB node further receives the configuration information #1, before the first IAB node determines the first BAP routing identifier based on the fourth configuration information, the method 800 further includes: The first IAB node determines the second BAP routing identifier based on the configuration information #1. The first IAB node determines a second BAP address based on the second BAP routing identifier and second configuration information, where the second configuration information indicates an association relationship between the second BAP routing identifier and the second BAP address, the second BAP address corresponds to a third IAB node, and the third IAB node is a next-hop node of the first IAB node. The first IAB node determines that a link between the first IAB node and the third IAB node is unavailable. For example, if at least one of the following conditions is met, the first IAB node determines that the link between the first IAB node and the third IAB node is unavailable: channel quality of the link between the first IAB node and the third IAB node is lower than a channel quality threshold, a radio link failure (radio link failure, RLF) occurs on the link between the first IAB node and the third IAB node, or a beam failure occurs on the link between the first IAB node and the third IAB node. For more descriptions of the second configuration information, refer to the following descriptions in S820.

For example, if the first IAB node receives the fifth configuration information after receiving the fourth configuration information, the first IAB node determines, based on the fifth configuration information, the first BAP routing identifier corresponding to the first data packet.

Optionally, if the fifth configuration information further indicates an association relationship between the second BAP routing identifier and the service type identifier of the first data packet, before the first IAB node determines the first BAP routing identifier based on the fifth configuration information, the method 800 further includes: The first IAB node receives the indication information from the donor IAB node, where the indication information indicates to send the first data packet through multicast.

Optionally, if the fifth configuration information further indicates an association relationship between the second BAP routing identifier and the service type identifier of the first data packet, before the first IAB node determines the first BAP routing identifier based on the fifth configuration information, the method 800 further includes: The first IAB node determines the second BAP routing identifier based on the fifth configuration information. The first IAB node determines a second BAP address based on the second BAP routing identifier and second configuration information, where the second BAP address corresponds to a third IAB node. The first IAB node determines that a link between the first IAB node and the third IAB node is unavailable. For more descriptions of the second configuration information, refer to the following descriptions in S820.

It should be understood that, when the fifth configuration information further indicates the association relationship between the second BAP routing identifier and the service type identifier of the first data packet, the first IAB node may determine, based on the value of the first BAP routing identifier, that the first BAP routing identifier corresponds to the multicast mode, and determine, based on the value of the second BAP routing identifier, that the second BAP routing identifier corresponds to the unicast mode.

In another possible implementation, if the first IAB node is a donor IAB node, the method 800 further includes: The first IAB node determines, based on sixth configuration information, the first BAP routing identifier corresponding to the first data packet.

The sixth configuration information indicates an association relationship between the first BAP routing identifier and second information, where the second information includes a destination IP address of the first data packet, and the destination IP address may be an IPv4 address, an IPv6 address, or an IPv6 address prefix. The sixth configuration information may be referred to as a downlink traffic to routing ID mapping configuration table. For example, the first IAB node may obtain the sixth configuration information from an IP-to-layer-2 traffic mapping information list (IP-to-layer-2 traffic mapping Information List) IE. Specifically, the sixth configuration information may include a backhaul information (BH information) IE and an IP header information (IP header information) IE. The first BAP routing identifier may be carried in a BAP routing ID IE in the BH information IE, and the destination IP address having the association relationship, that is, a correspondence, with the first BAP routing identifier may be carried in a destination IAB transport network layer address (Destination IAB TNL Address) IE in the IP header information IE. Optionally, the second information further includes an IPv6 flow label, and the IPv6 flow label may be carried in an IPv6 flow label (IPv6 Flow Label) IE in the IP header information IE. Optionally, the second information further includes a differentiated services code point (differentiated services code point, DSCP), and the DSCP may be carried in a differentiated services (differentiated services, DS) information list (DS Information List) IE in the IP header information IE.

Optionally, if the sixth configuration information further indicates an association relationship between the second BAP routing identifier and the second information, and the donor IAB node is a complete entity, when the first IAB node determines to send the first data packet in the multicast mode, the first IAB node determines the first BAP routing identifier based on the sixth configuration information.

Optionally, if the sixth configuration information further indicates an association relationship between the second BAP routing identifier and the second information, and the first IAB node is a DU part of the donor IAB node, before the first IAB node determines the first BAP routing identifier based on the sixth configuration information, the method 800 further includes: The first IAB node receives the indication information from the CU part of the donor IAB node, where the indication information indicates to send the first data packet through multicast.

Optionally, if the sixth configuration information further indicates an association relationship between the second BAP routing identifier and the second information, before the first IAB node determines the first BAP routing identifier based on the sixth configuration information, the method 800 further includes: The first IAB node determines the second BAP routing identifier based on the sixth configuration information. The first IAB node determines a second BAP address based on the second BAP routing identifier and second configuration information, where the second BAP address corresponds to a third IAB node. The first IAB node determines that a link between the first IAB node and the third IAB node is unavailable. For more descriptions of the second configuration information, refer to the following descriptions in S820.

It should be understood that when the sixth configuration information further indicates the association relationship between the second BAP routing identifier and the second information, the first IAB node may determine, based on the value of the first BAP routing identifier, that the first BAP routing identifier corresponds to the multicast mode, and determine, based on the value of the second BAP routing identifier, that the second BAP routing identifier corresponds to the unicast mode.

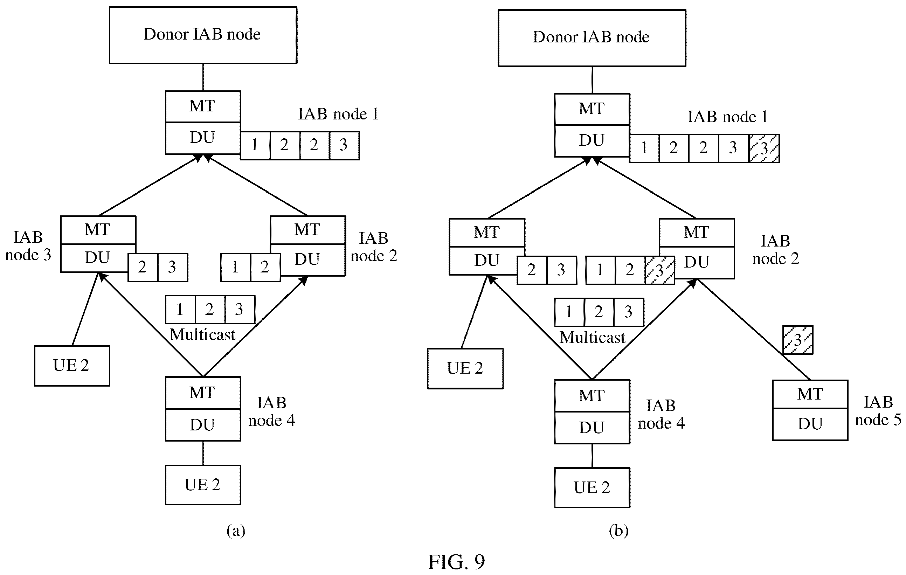

When the multicast mode is supported in a multi-hop IAB scenario, if the first IAB node is an intermediate IAB node, and the first IAB node has a plurality of prior-hop IAB nodes, the first IAB node may receive a same data packet from the plurality of prior-hop IAB nodes. If the first IAB node forwards the plurality of same data packets, a resource waste is caused. As shown in (a) in FIG. 9, an IAB node 1 is an example of the first IAB node, an IAB node 4 sends a data packet 1 to a data packet 3 to an IAB node 2 and an IAB node 3 in a multicast mode, the IAB node 2 receives the data packet 1 and the data packet 2, and the IAB node 3 receives the data packet 2 and the data packet 3. Further, the IAB node 2 sends the data packet 1 and the data packet 2 to the IAB node 1, and the IAB node 3 sends the data packet 2 and the data packet 3 to the IAB node 1. In this case, the IAB node 1 receives two data packets 2. If the IAB node 1 forwards both the data packets 2 to the donor IAB node, a resource waste is caused.

Based on the foregoing descriptions, the first IAB node may receive a plurality of duplicated data packets. The following describes how the first IAB node performs de-duplication on the received data packets.

In a possible implementation, if the first IAB node is an intermediate IAB node, the method 800 further includes: The first IAB node determines that a packet identifier corresponding to the first data packet is different from packet identifiers corresponding to other data packets in a receive window, where the packet identifier includes a BAP packet identifier. For example, the BAP packet identifier may be a BAP sequence number (sequence number, SN).

When the first IAB node determines that the packet identifier corresponding to the first data packet is different from the packet identifiers corresponding to the other data packets in the receive window, the first IAB node buffers the first data packet in the receive window. Optionally, if a quantity of data packets buffered in the receive window reaches a largest value, the first IAB node sends, to a next-hop IAB node, a first received data packet or a data packet with a smallest sequence number in the data packets buffered in the receive window, or the first IAB node slides the receive window, so that the first IAB node buffers the first data packet in the receive window.

It should be understood that if the first IAB node determines that the packet identifier corresponding to the first data packet is the same as the packet identifiers corresponding to the other data packets in the receive window, the first IAB node discards the first data packet, and ends performing the method 800. When the packet identifier corresponding to the first data packet is different from the packet identifiers corresponding to the other data packets in the receive window, the first IAB node continues to perform the method 800.

In another possible implementation, if the first IAB node is an intermediate IAB node, the method 800 further includes: The first IAB node determines that a packet identifier corresponding to the first data packet is different from N packet identifiers buffered by the first IAB node, where the N packet identifiers correspond to N data packets received by the first IAB node before the first data packet is received. N is a positive integer.

For example, the N data packets are data packets that have different packet identifiers in W data packets received by the first IAB node before the first data packet is received, where W is an integer greater than or equal to N.

When the first IAB node determines that the packet identifier corresponding to the first data packet is different from the N packet identifiers, the first IAB node buffers the packet identifier corresponding to the first data packet. For example, if N<M, the first IAB node directly buffers the packet identifier corresponding to the first data packet; or if N=M, after deleting a packet identifier that is first buffered by the first IAB node in the N packet identifiers, the first IAB node buffers the packet identifier corresponding to the first data packet. M is a positive integer, and M is a maximum quantity of packet identifiers for which buffering is supported by the first IAB node.

It should be understood that if the first IAB node determines that the packet identifier corresponding to the first data packet is the same as one of the N packet identifiers, the first IAB node discards the first data packet, and ends performing the method 800. When the packet identifier corresponding to the first data packet is different from the N packet identifiers, the first IAB node continues to perform the method 800.

Optionally, for an uplink data packet, a BAP packet identifier of the data packet may be allocated by an IAB node. Therefore, BAP packet identifiers allocated by different source nodes may be duplicate. As shown in (b) in FIG. 9, a BAP packet identifier of a data packet sent by an IAB node 4 is 3, and a BAP packet identifier of a data packet sent by an IAB node 5 is also 3. However, the data packets sent by the IAB node 4 and the IAB node 5 are different data packets. After two data packets whose BAP packet identifiers are both 3 arrive at an IAB node 1, if the IAB node 1 determines, still based on the BAP packet identifiers, whether the received data packets are the same, a non-duplicated data packet may be discarded.

Based on the foregoing descriptions, the packet identifier may further include a BAP routing identifier of a data packet and/or a BAP address of a source node of the data packet. The BAP routing identifier of the data packet indicates a destination node of the data packet and a path for transmitting the data packet. The source node of the data packet is a source IAB node of the data packet. For example, if the data packet is an uplink data packet, the source node of the data packet is an access IAB node; or if the data packet is a downlink data packet, the source node of the data packet is a donor IAB node.

Further, if the first IAB node is an access IAB node or a donor IAB node, and the first IAB node determines the first BAP routing identifier corresponding to the first data packet, S850 or S860 continues to be performed in the method 800. Alternatively, if the first IAB node is an intermediate IAB node, and the first data packet includes the first BAP routing identifier, S850 or S860 continues to be performed in the method 800. Alternatively, if the first IAB node is an intermediate IAB node, and the first data packet includes the second BAP routing identifier, S820 to S840 continue to be performed in the method 800.

S820: The first IAB node determines the second BAP address based on the second BAP routing identifier included in the first data packet and the second configuration information.

The second BAP address corresponds to the third IAB node, and the third IAB node is a next-hop node of the first IAB node.

The second configuration information indicates the association relationship between the second BAP routing identifier and the second BAP address. For example, the first IAB node receives the second configuration information from the donor IAB node by using an F1AP message. An example of the second configuration information is shown in Table 1. A next-hop BAP address shown in Table 1 is an example of the second BAP address. A BAP routing ID is an example of the second BAP routing identifier. It may be understood that the second configuration information may include the BAP routing ID and the next-hop BAP address in Table 1, that is, does not include other information elements than the BAP routing ID and the next-hop BAP address in Table 1, or may further include one or more of other information elements than the BAP routing ID and the next-hop BAP address in Table 1.

**Table 1**

| |
|---|
| F1AP: BAP mapping configuration (BAP mapping configuration) |
| Message type (message type) |
| Transaction ID (transaction ID) |
| Backhaul routing information added list (BH Routing Information Added List) |
| >Backhaul routing information added list item (BH Routing Information Added List Item) |
| >>BAP routing ID |
| >>Next-hop BAP address (Next-Hop BAP Address) |
| >>Non-F1-terminating topology indicator (Non-F1-terminating Topology Indicator) |

S830: The first IAB node determines that the link between the first IAB node and the third IAB node is unavailable.

It may be understood that, a method for determining that the link between the first IAB node and the third IAB node is unavailable is not limited in this embodiment, for example, may be an existing method.

S840: The first IAB node determines the first BAP routing identifier based on the destination node indicated by the second BAP routing identifier.

It should be understood that the destination node indicated by the first BAP routing identifier and determined by the first IAB node is the same as the destination node indicated by the second BAP routing identifier.

For example, the first IAB node first determines the destination node indicated by the second BAP routing identifier, that is, obtaining, by parsing the second BAP routing identifier, the destination BAP address included in the second BAP routing identifier. Then, the first IAB node determines, as the first BAP routing identifier, a BAP routing identifier in which a stored destination node indicated by the routing identifier is the same as the destination node indicated by the second BAP routing identifier, that is, the first IAB node determines, as the first BAP routing identifier, a BAP routing identifier in which a stored destination BAP address included in the routing identifier is the same as the destination BAP address included in the second BAP routing identifier.

S850: The first IAB node determines the first BAP address based on the first BAP routing identifier corresponding to the first data packet and the first configuration information.

The first BAP address corresponds to a plurality of second IAB nodes, and the plurality of second IAB nodes are next-hop nodes of the first IAB node. For example, the first BAP address includes BAP addresses of the plurality of second IAB nodes. For another example, the first BAP address is a virtual BAP address corresponding to the plurality of second IAB nodes.

The first configuration information indicates an association relationship between the first BAP routing identifier and the first BAP address. For example, the first IAB node receives the first configuration information from the donor IAB node by using an F1AP message or an RRC message. An example of the first configuration information is shown in Table 2. A next-hop group BAP address shown in Table 2 is an example of the second BAP address. A BAP routing ID is an example of the first BAP routing identifier. It may be understood that the first configuration information may include the BAP routing ID and the next-hop group BAP address in Table 2, that is, does not include other information elements than the BAP routing ID and the next-hop group BAP address, or may further include one or more of other information elements than the BAP routing ID and the next-hop group BAP address.

**Table 2**

| |
|---|
| F1AP or RRC |
| Backhaul multicast routing information added list (BH Multicast Routing Information Added List) |
| >Backhaul multicast routing information added list item (BH Multicast Routing Information Added List Item) |
| >>BAP routing ID |
| >>Next-hop group BAP address (Next-Hop Group BAP Address) |

Optionally, the first configuration information further indicates an association relationship between the first BAP routing identifier and the second BAP address. It should be understood that, when the first configuration information further indicates the association relationship between the first BAP routing identifier and the second BAP address, the first BAP routing identifier corresponds to both the unicast mode and the multicast mode. In this case, an example of the first configuration information is shown in Table 3. A next-hop group BAP address shown in Table 3 is an example of the first BAP address, and a next-hop BAP address is an example of the second BAP address. A BAP routing ID is an example of the first BAP routing identifier. It may be understood that the first configuration information may include the BAP routing ID, the next-hop BAP address, and the next-hop group BAP address in Table 3, that is, does not include other information elements than the BAP routing ID, the next-hop BAP address, and the next-hop group BAP address in Table 3, or may further include one or more of other information elements than the BAP routing ID, the next-hop BAP address, and the next-hop group BAP address in Table 3.

**Table 3**

| |
|---|
| F1AP: BAP mapping configuration (BAP mapping configuration) |
| Message type (message type) |
| Transaction ID (transaction ID) |
| Backhaul routing information added list (BH Routing Information Added List) |
| >Backhaul routing information added list item (BH Routing Information Added List Item) |
| >>BAP routing ID |
| >>Next-hop BAP address (Next-Hop BAP Address) & Next-hop group BAP address (Next-Hop Group BAP Address) |
| >>Non-F1-terminating topology indicator (Non-F1-terminating Topology Indicator) |

It should be understood that when the first configuration information further indicates the association relationship between the first BAP routing identifier and the second BAP address, the first IAB node may determine two BAP addresses, namely, the first BAP address and the second BAP address, based on the first BAP routing identifier and the first configuration information. In this case, the first IAB node determines the first BAP address from the two BAP addresses based on more additional information. The following describes how the first IAB node determines the first BAP address when the first configuration information further indicates the association relationship between the first BAP routing identifier and the second BAP address.

In a possible implementation, when the first configuration information further indicates the association relationship between the first BAP routing identifier and the second BAP address, the first IAB node determines the first BAP address based on the indication information. In other words, the first IAB node determines, based on the indication information, to send, through multicast, a second data packet to the plurality of second IAB nodes corresponding to the first BAP address, where the second data packet is determined based on the first data packet. The indication information indicates to send the first data packet through multicast.

For example, if the first IAB node is an intermediate IAB node, and the first data packet includes the first BAP routing identifier, the second data packet is the same as the first data packet. Alternatively, if the first IAB node is an intermediate IAB node, and the first data packet includes the second BAP routing identifier, the first IAB node replaces the second BAP routing identifier included in the first data packet with the first BAP routing identifier, to generate the second data packet. Alternatively, if the first IAB node is an access IAB node or a donor IAB node, after determining the first BAP routing identifier, the first IAB node adds the first BAP routing identifier to a BAP header of the first data packet, to generate the second data packet.

A manner in which the first IAB node obtains the indication information is not limited in this embodiment of this application.

For example, if the first IAB node is an intermediate IAB node or an access IAB node, the first IAB node may receive the indication information from the donor IAB node. For example, the first IAB node receives the indication information from the donor IAB node by using an RRC message or an F1AP message.

For example, if the first IAB node is a DU part of the donor node, the first IAB node receives the indication information from a CU part of the donor IAB node.

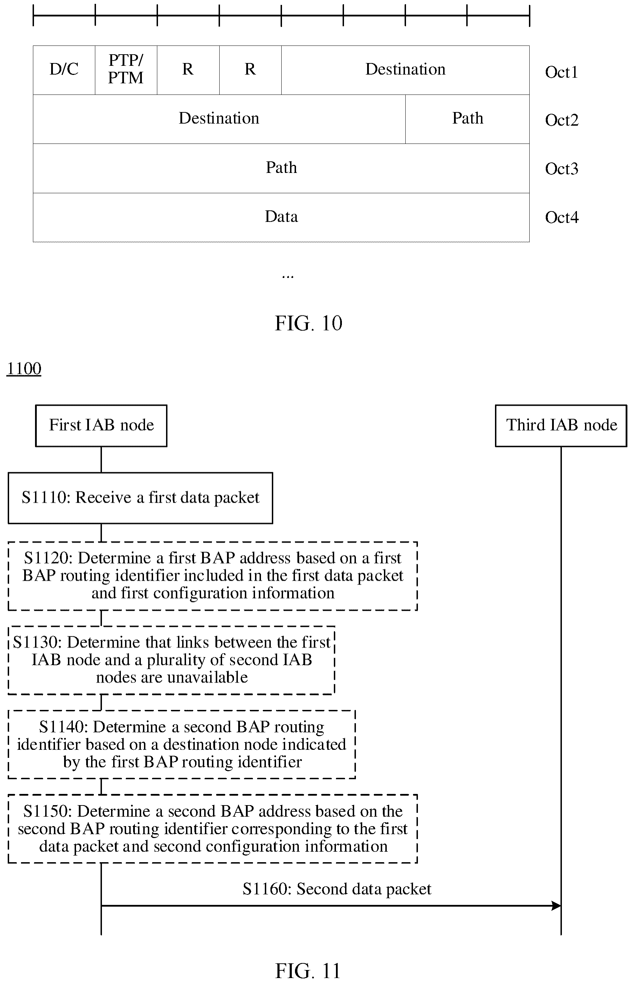

For example, if the first IAB node is an intermediate IAB node, and the first data packet includes the indication information, the first IAB node may obtain the indication information from the first data packet. For example, the indication information is carried in the BAP header of the first data packet. The first data packet including the indication information is shown in FIG. 10. A PTP/PTM field carries the indication information. For example, if a value of the PTP/PTM field is "0", the PTP/PTM field indicates to send the first data packet through multicast; or if a value of the PTP/PTM field is "1", the PTP/PTM field indicates to send the first data packet through unicast. Alternatively, if a value of the PTP/PTM field is "1", the PTP/PTM field indicates to send the first data packet through multicast; or if a value of the PTP/PTM field is "0", the PTP/PTM field indicates to send the first data packet through unicast. For example, in FIG. 10, the field for carrying the indication information is named "PTP/PTM", and the field for carrying the indication information may also be named in another form. For example, the field for carrying the indication information may be named "PTP" or "PTM".

In another possible implementation, when the first configuration information further indicates the association relationship between the first BAP routing identifier and the second BAP address, the first IAB node selects the first BAP address when determining that the link between the first IAB node and the third IAB node is unavailable. In other words, the first IAB node first selects the second BAP address based on the first BAP routing identifier and the first configuration information; and when determining that the link between the third IAB node corresponding to the second BAP address and the first IAB node is unavailable, the first IAB node selects the first BAP address based on the first BAP routing identifier and the first configuration information.

In still another possible implementation, if the first IAB node is a donor IAB node, the donor IAB node is a complete entity, and the first configuration information further indicates the association relationship between the first BAP routing identifier and the second BAP address, the first IAB node determines the first BAP address when determining to send the second data packet in the multicast mode.

The foregoing describes a manner in which the first IAB node determines the first BAP address. If the first IAB node can send a data packet to a next-hop IAB node on different channels, the first IAB node may further determine a first channel for transmitting the second data packet. The following describes a manner in which the first IAB node determines an identifier of the first channel.

Optionally, the method 800 further includes: The first IAB node determines the identifier of the first channel based on third configuration information. The third configuration information indicates an association relationship between an identifier of a first link and first information, the identifier of the first link indicates links between the first IAB node and the plurality of second IAB nodes, and the first information includes the identifier of the first channel. For example, the first channel is a BH RLC channel or a BH PTM RLC channel. The third configuration information may be referred to as a BH (PTM) RLC channel mapping configuration.

When the third configuration information indicates the association relationship between the identifier of the first link and the first information, different channels may be configured for data packets transmitted on different links. When different channels are configured for data packets transmitted on different links, transmission quality of service (quality of service, QoS) requirements of the different data packets can be met by using the different channels.

Optionally, the first information further includes one or more of the following: an identifier of a second link, an identifier of a second channel, a service type identifier, a destination IP address of the first data packet, a flow label corresponding to the first data packet, and a DSCP corresponding to the first data packet. The second link is a link used by the first IAB node to receive the first data packet, the second channel is a channel used by the first IAB node to receive the first data packet, and the service type identifier is for identifying a service type of the first data packet.

For example, if the first IAB node is an intermediate IAB node, the first information further includes the identifier of the second link and the identifier of the second channel.

When the first information includes the identifier of the second link and the identifier of the second channel, different channels may be configured for data packets received on different links and/or different channels. When different channels are configured for different data packets, transmission quality of service (quality of service, QoS) requirements of the different data packets can be met by using the different channels.

The third configuration information may be referred to as a BH (PTM) RLC channel mapping configuration. For example, the third configuration information may include a BAP layer BH RLC channel mapping information list (BAP layer BH RLC channel mapping information List) IE. Alternatively, the third configuration information may include a BH RLC channel mapping information list IE, a configured BAP address (Configured BAP address) IE, and a BH RLC to be setup/modified (BH RLC to be Setup/Modified) IE. Specifically, the identifier of the second link may be carried in a prior-hop BAP address (Prior-Hop BAP Address) IE included in the BH RLC channel mapping information list IE, and/or carried in a configured BAP address IE in an uplink UE-associated F1AP (UE-associated F1AP) message. The identifier of the first link may be carried in a next-hop BAP address IE included in the BH RLC channel mapping information list IE, and/or carried in a configured BAP address IE in a downlink UE-associated F1AP message. The identifier of the second channel may be carried in an ingress BH RLC channel identifier (Ingress BH RLC CH ID) IE included in the BH RLC channel mapping information list IE, and/or carried in an ingress BH RLC CH ID IE in the uplink UE-associated F1AP message. The identifier of the first channel may be carried in an egress BH RLC channel identifier (Egress BH RLC CH ID) IE included in the BH RLC channel mapping information list IE, and/or carried in an egress BH RLC CH ID IE in the downlink UE-associated F1AP message.

For example, if the first IAB node is an access IAB node, the first information further includes the service type identifier.

When the first information includes the service type identifier, different channels may be configured for different services. When different channels are configured for different services, transmission QoS requirements of the different services can be met by using the different channels.

The third configuration information may be referred to as an uplink traffic to BH (PTM) RLC channel mapping configuration. For example, the third configuration information may include a BH information IE, and a UL UP TNL information IE for F1-U packets or a non-UP traffic type IE for non-F1-U packets. The service type identifier may be carried in the UL UP TNL information IE for F1-U packets or the non-UP traffic type IE for non-F1-U packets. The identifier of the first link that has a mapping relationship with the service type identifier may be carried in a next-hop BAP address IE in the BH information IE, the identifier of the first channel that has a mapping relationship with the identifier of the first link may be carried in a BH RLC CH ID IE included in the BH information IE.

For example, if the first IAB node is a donor IAB node, the first information further includes one or more of a destination IP address, an IPv6 flow label, and a DSCP of the first data packet.

When the first information further includes one or more of the destination IP address, the IPv6 flow label, and the DSCP of the first data packet, different channels may be configured for data packets sent to different destination IP addresses and/or data packets corresponding to different traffic. When different channels are configured for different data packets, transmission QoS requirements of the different data packets can be met by using the different channels.

The third configuration information may be referred to as a downlink traffic to BH (PTM) RLC channel mapping configuration. For example, the third configuration information may include an IP header information IE, a BH information IE, and/or a BAP address IE in a UE-associated F1AP message. The destination IP address may be carried in a destination IAB TNL address IE in the IP header information IE, the IPv6 flow label may be carried in an IPv6 flow label IE in the IP header information IE, and the DSCP may be carried in a DS information list IE in the IP header information IE. The identifier of the first link may be carried in a next-hop BAP address IE in the BH information IE, and/or carried in a BAP address IE in the UE-associated F1AP message. The identifier of the first channel may be carried in an egress BH RLC CH ID IE included in the BH information IE, and/or carried in a BH RLC CH ID IE in the UE-associated F1AP message.

In another possible implementation, if the first IAB node is an intermediate IAB node, and the first IAB node receives configuration information #2 after receiving the third configuration information, the first IAB node determines the identifier of the first channel based on the configuration information #2. Alternatively, if the first IAB node never receives the third configuration information, the first IAB node determines the identifier of the first channel based on configuration information #2.

The configuration information #2 indicates the identifier of the first channel corresponding to the multicast mode. For example, the configuration information #2 is carried in a default uplink-BH-RLC-channel (defaultUL-BH-RLC-Channel) IE corresponding to the multicast mode.

It should be noted that S850 is an optional step. For example, if the first IAB node forwards a data packet to all next-hop IAB nodes by default, and the plurality of second IAB nodes are all next-hop nodes of the first IAB node, after receiving the first data packet, the first IAB node may directly send the second data packet to the plurality of second IAB nodes through multicast.

S860: The first IAB node sends the second data packet to the plurality of second IAB nodes through multicast.

For example, the second data packet is a BAP protocol data unit (protocol data unit, PDU).

The second data packet is determined based on the first data packet. For example, if the first IAB node is an intermediate IAB node, and the first data packet includes a first BAP routing identifier, the second data packet is the same as the first data packet. Alternatively, if the first IAB node is an intermediate IAB node, and the first data packet includes the second BAP routing identifier, the first IAB node replaces the second BAP routing identifier included in the first data packet with the first BAP routing identifier, to generate the second data packet. Alternatively, if the first IAB node is an access IAB node or a donor IAB node, after determining the first BAP routing identifier, the first IAB node adds the first BAP routing identifier to the BAP header of the first data packet, to generate the second data packet.

In a possible implementation, after the first IAB node determines the first BAP address based on the first BAP routing identifier, because the first IAB node may determine, based on the value of the first BAP routing identifier, that the first BAP routing identifier corresponds to the multicast mode, the first IAB node sends the second data packet to the plurality of second IAB nodes through multicast.

In another possible implementation, the first IAB node sends the second data packet to the plurality of second IAB nodes through multicast based on indication information. For a manner of obtaining the indication information by the first IAB node, refer to the foregoing descriptions in S850.

In still another possible implementation, if the first configuration information does not indicate the association relationship between the first BAP routing identifier and the second BAP address, the first IAB node may determine, based on an IE that carries the first configuration information, that the first BAP routing identifier corresponds to the multicast mode, so that the first IAB node sends the second data packet to the plurality of second IAB nodes through multicast.

Optionally, in S850, if the first IAB node further determines the identifier of the first channel, in S860, the first IAB node sends the second data packet to the plurality of second IAB nodes on the first channel through multicast.

Optionally, as described in S810, if the first IAB node buffers the first data packet in the receive window, the first data packet is the data packet that is first received in the receive window, and/or the first data packet is the data packet with the smallest sequence number in the receive window. In this case, the first IAB node sends the second data packet to the plurality of second IAB nodes through multicast.

In this embodiment of this application, after the first IAB node receives the first data packet, if a next-hop node of the first IAB node includes the plurality of second IAB nodes, the first IAB node may send a data packet to the plurality of second IAB nodes through multicast, to implement multicast transmission in the multi-hop IAB scenario.

When a data packet is transmitted in a multicast mode, normal transmission of the data packet can be ensured provided that channel quality of at least one link in a plurality of links is good. Compared with a manner of transmitting a data packet in a unicast mode, using the multicast mode is more conducive to successfully transmitting a data packet, thereby improving transmission performance in the multi-hop IAB scenario.

The foregoing describes, with reference to FIG. 8, how to implement multicast transmission in the multi-hop IAB scenario. The following describes, with reference to FIG. 11, how to determine to use a unicast mode to transmit a data packet when the multi-hop IAB scenario supports both a multicast mode and the unicast mode.

FIG. 11 is a schematic flowchart of a data transmission method according to another embodiment of this application. The method 1100 shown in FIG. 11 may include the following steps.

S1110: A first IAB node receives a first data packet.

For more descriptions of receiving the first data packet by the first IAB node, refer to S810 in the foregoing method 800.

In an IAB network, after receiving a data packet, an IAB node usually identifies, based on a BAP routing identifier corresponding to the data packet, a next-hop IAB node corresponding to the data packet. Therefore, after receiving the first data packet, the first IAB node may first determine a second BAP routing identifier corresponding to the first data packet, and then determine a next-hop node of the first IAB node based on the second BAP routing identifier. The following separately describes a manner in which the first IAB node determines the second BAP routing identifier corresponding to the first data packet when the first IAB node is an access IAB node or a donor IAB node.

In a possible implementation, if the first IAB node is an access IAB node, the method 1100 further includes: The first IAB node determines, based on configuration information #1 or configuration information #3, the second BAP routing identifier corresponding to the first data packet.

For more descriptions of the second BAP routing identifier and the configuration information #1, refer to S810 in the foregoing method 800.

The configuration information #3 indicates an association relationship between the second BAP routing identifier and a service type identifier of the first data packet. The configuration information #3 may be referred to as an uplink traffic to routing ID mapping configuration table. For more descriptions of the configuration information #3, refer to the fifth configuration information in S810 in the foregoing method 800.

The following describes a manner in which the first IAB node determines a first BAP routing identifier based on the configuration information #1.

For example, if the first IAB node never receives the configuration information #3, or the first IAB node receives the configuration information #1 after receiving the configuration information #3, the first IAB node determines, based on the configuration information #1, the second BAP routing identifier corresponding to the first data packet.

Optionally, if the first IAB node further receives fourth configuration information, and the fourth configuration information indicates a first BAP routing identifier corresponding to a multicast mode, before the first IAB node determines the second BAP routing identifier based on the configuration information #1, the method 1100 further includes: The first IAB node receives indication information #1 from a donor IAB node, where the indication information #1 indicates to send the first data packet through unicast.

For more descriptions of the fourth configuration information and the first BAP routing identifier, refer to S810 in the foregoing method 800.

For example, the indication information #1 may be unicast indication information or multicast disable indication information. That the first IAB node receives the indication information #1 from the donor IAB node includes: The first IAB node receives the indication information #1 from the donor IAB node by using an RRC message or an F1AP message. If the donor IAB node is of a CU-DU separated architecture, the first IAB node receives the indication information #1 from a CU part of the donor IAB node.

Optionally, if the first IAB node further receives fourth configuration information, before the first IAB node determines the second BAP routing identifier based on the configuration information #1, the method 1100 further includes: The first IAB node determines a first BAP routing identifier based on the fourth configuration information. The first IAB node determines a first BAP address based on the first BAP routing identifier and first configuration information, where the first configuration information indicates an association relationship between the first BAP routing identifier and the first BAP address, the first BAP address corresponds to a plurality of second IAB nodes, and the plurality of second IAB nodes are next-hop nodes of the first IAB node. The first IAB node determines that links between the first IAB node and the plurality of second IAB nodes are unavailable. For example, if at least one of the following conditions is met, the first IAB node determines that the links between the first IAB node and the plurality of second IAB nodes are unavailable: (a) Channel quality of a link between the first IAB node and at least one second IAB node in the plurality of second IAB nodes is lower than a channel quality threshold. (b) An RLF occurs on a link between the first IAB node and at least one second IAB node in the plurality of second IAB nodes. (c) A beam failure occurs on a link between the first IAB node and at least one second IAB node in the plurality of second IAB nodes. (d) Channel quality of links between the first IAB node and P second IAB nodes in the plurality of second IAB nodes is lower than a channel quality threshold. (e) An RLF occurs on links between the first IAB node and P second IAB nodes in the plurality of second IAB nodes. (f) A beam failure occurs on links between the first IAB node and P second IAB nodes in the plurality of second IAB nodes. P is a positive integer, a ratio of P to a quantity of the plurality of second IAB nodes exceeds a preset ratio, or P exceeds a preset value.

For more descriptions of the first configuration information, refer to S850 in the foregoing method 800.

The following describes a manner in which the first IAB node determines a first BAP routing identifier based on the configuration information #3.

For example, if the first IAB node receives the configuration information #3 after receiving the configuration information #1, the first IAB node determines, based on the configuration information #3, the second BAP routing identifier corresponding to the first data packet.

Optionally, if the configuration information #3 further indicates an association relationship between the first BAP routing identifier and the service type identifier of the first data packet, before the first IAB node determines the second BAP routing identifier based on the configuration information #3, the method 1100 further includes: The first IAB node receives indication information #1 from a donor IAB node, where the indication information #1 indicates to send the first data packet through unicast.

Optionally, if the configuration information #3 further indicates an association relationship between the first BAP routing identifier and the service type identifier of the first data packet, before the first IAB node determines the second BAP routing identifier based on the configuration information #3, the method 1100 further includes: The first IAB node determines the first BAP routing identifier based on the configuration information #3. The first IAB node determines a first BAP address based on the first BAP routing identifier and first configuration information, where the first BAP address corresponds to a plurality of second IAB nodes. The first IAB node determines that links between the first IAB node and the plurality of second IAB nodes are unavailable.

It should be understood that, when the configuration information #3 further indicates the association relationship between the first BAP routing identifier and the service type identifier of the first data packet, the first IAB node may determine, based on a value of the first BAP routing identifier, that the first BAP routing identifier corresponds to the multicast mode, and determine, based on a value of the second BAP routing identifier, that the second BAP routing identifier corresponds to the unicast mode.

In another possible implementation, if the first IAB node is a donor IAB node, the method 1100 further includes: The first IAB node determines, based on configuration information #4, the second BAP routing identifier corresponding to the first data packet.

The configuration information #4 indicates an association relationship between the second BAP routing identifier and second information, and the second information includes a destination IP address of the first data packet. The configuration information #4 may be referred to as a downlink traffic to routing ID mapping configuration table. For more descriptions of the configuration information #4, refer to the sixth configuration information in S810 in the foregoing method 800.

Optionally, if the configuration information #4 further indicates an association relationship between the first BAP routing identifier and the second information, and the donor IAB node is a complete entity, when the first IAB node determines to send the first data packet in the unicast mode, the first IAB node determines the second BAP routing identifier based on the configuration information #4.

Optionally, if the configuration information #4 further indicates an association relationship between the first BAP routing identifier and the second information, and the first IAB node is a DU part of the donor IAB node, before the first IAB node determines the second BAP routing identifier based on the configuration information #4, the method 1100 further includes: The first IAB node receives indication information #1 from a CU part of the donor IAB node, where the indication information #1 indicates to send the first data packet through unicast.

Optionally, if the configuration information #4 further indicates an association relationship between the first BAP routing identifier and the second information, before the first IAB node determines the second BAP routing identifier based on the configuration information #4, the method 1100 further includes: The first IAB node determines the first BAP routing identifier based on the configuration information #4. The first IAB node determines a first BAP address based on the first BAP routing identifier and first configuration information, where the first BAP address corresponds to a plurality of second IAB nodes. The first IAB node determines that links between the first IAB node and the plurality of second IAB nodes are unavailable.

It should be understood that, when the configuration information #4 further indicates the association relationship between the first BAP routing identifier and the second information, the first IAB node may determine, based on the value of the first BAP routing identifier, that the first BAP routing identifier corresponds to the multicast mode, and determine, based on the value of the second BAP routing identifier, that the second BAP routing identifier corresponds to the unicast mode.

When the multicast mode is supported in a multi-hop IAB scenario, if the first IAB node is an intermediate IAB node, the first IAB node may receive a plurality of duplicated data packets. The following describes how the first IAB node performs de-duplication on the received data packets.

In a possible implementation, if the first IAB node is an intermediate IAB node, the method 1100 further includes: The first IAB node determines that a packet identifier corresponding to the first data packet is different from packet identifiers corresponding to other data packets in a receive window, where the packet identifier includes a BAP packet identifier. For example, the BAP packet identifier may be a BAP SN.

In another possible implementation, if the first IAB node is an intermediate IAB node, the method 1100 further includes: The first IAB node determines that a packet identifier corresponding to the first data packet is different from N packet identifiers buffered by the first IAB node, where the N packet identifiers correspond to N data packets received by the first IAB node before the first data packet is received. N is a positive integer.

For example, the N data packets are data packets that have different packet identifiers in W data packets received by the first IAB node before the first data packet is received, where W is an integer greater than or equal to N.

Optionally, the packet identifier may further include a BAP routing identifier of a data packet and/or a BAP address of a source node of the data packet. The BAP routing identifier of the data packet indicates a destination node of the data packet and a path for transmitting the data packet.

Further, if the first IAB node is an access IAB node or a donor IAB node, and the first IAB node determines the second BAP routing identifier corresponding to the first data packet, S1150 or S1160 continues to be performed in the method 1100. Alternatively, if the first IAB node is an intermediate IAB node, and the first data packet includes the second BAP routing identifier, S1150 or S1160 continues to be performed in the method 1100. Alternatively, if the first IAB node is an intermediate IAB node, and the first data packet includes the first BAP routing identifier, S1120 to S1140 continue to be performed in the method 1100.

S1120: The first IAB node determines a first BAP address based on the first BAP routing identifier included in the first data packet and first configuration information.

For more descriptions of the first configuration information, refer to S850 in the foregoing method 800.

S1130: The first IAB node determines that links between the first IAB node and a plurality of second IAB nodes are unavailable.

For a manner in which the first IAB node determines that the links between the first IAB node and the plurality of second IAB nodes are unavailable, refer to the foregoing descriptions in S1110.

S1140: The first IAB node determines a second BAP routing identifier based on a destination node indicated by the first BAP routing identifier.

It should be understood that a destination node indicated by the second BAP routing identifier determined by the first IAB node is the same as the destination node indicated by the first BAP routing identifier.

For example, the first IAB node first determines the destination node indicated by the first BAP routing identifier, that is, obtaining, by parsing the first BAP routing identifier, a destination BAP address included in the first BAP routing identifier. Then, the first IAB node determines, as the second BAP routing identifier, a BAP routing identifier in which a stored destination node indicated by the routing identifier is the same as the destination node indicated by the first BAP routing identifier, that is, the first IAB node determines, as the second BAP routing identifier, a BAP routing identifier in which a stored destination BAP address included in the routing identifier is the same as the destination BAP address included in the first BAP routing identifier.

S1150: The first IAB node determines a second BAP address based on the second BAP routing identifier corresponding to the first data packet and second configuration information.

For more descriptions of the second configuration information, refer to S820 in the foregoing method 800.

Optionally, the second configuration information further indicates an association relationship between the second BAP routing identifier and the first BAP address. When the second configuration information further indicates the association relationship between the second BAP routing identifier and the first BAP address, an example of the second configuration information is shown in Table 3 above. It should be understood that when the second configuration information further indicates the association relationship between the second BAP routing identifier and the first BAP address, the second BAP routing identifier corresponds to both the unicast mode and the multicast mode.

It should be understood that when the second configuration information further indicates the association relationship between the second BAP routing identifier and the first BAP address, the first IAB node may determine two BAP addresses, namely, the first BAP address and the second BAP address, based on the second BAP routing identifier and the second configuration information. In this case, the first IAB node needs more additional information to determine the second BAP address from the two BAP addresses. The following describes how the first IAB node determines the second BAP address when the second configuration information further indicates the association relationship between the first BAP routing identifier and the first BAP address.

In a possible implementation, when the second configuration information further indicates the association relationship between the second BAP routing identifier and the first BAP address, the first IAB node determines the second BAP address based on the indication information #1. In other words, the first IAB node determines, based on the indication information #1, to send, through unicast, a second data packet to a third IAB node corresponding to the second BAP address, where the second data packet is determined based on the first data packet. The indication information #1 indicates to send the first data packet through unicast/multicast.

For example, if the first IAB node is an intermediate IAB node, and the first data packet includes the second BAP routing identifier, the second data packet is the same as the first data packet. Alternatively, if the first IAB node is an intermediate IAB node, and the first data packet includes the first BAP routing identifier, the first IAB node replaces the first BAP routing identifier included in the first data packet with the second BAP routing identifier, to generate the second data packet. Alternatively, if the first IAB node is an access IAB node or a donor IAB node, after determining the second BAP routing identifier, the first IAB node adds the second BAP routing identifier to a BAP header of the first data packet, to generate the second data packet.

For a manner in which the first IAB node obtains the indication information #1, refer to the manner in which the first IAB node obtains the indication information in S850 in the foregoing method 800.

In another possible implementation, when the second configuration information further indicates the association relationship between the second BAP routing identifier and the first BAP address, the first IAB node selects the second BAP address when determining that the links between the first IAB node and the plurality of second IAB nodes are unavailable. In other words, the first IAB node first selects the first BAP address based on the second BAP routing identifier and the second configuration information; and when determining that the links between the first IAB node and the plurality of second IAB nodes corresponding to the first BAP address are unavailable, the first IAB node selects the second BAP address based on the second BAP routing identifier and the second configuration information.

In still another possible implementation, if the first IAB node is a donor IAB node, the donor IAB node is a complete entity, and the second configuration information further indicates the association relationship between a second BAP routing identifier and the first BAP address, the first IAB node determines the second BAP address when determining to send the second data packet in the unicast mode.

The foregoing describes a manner in which the first IAB node determines the second BAP address. If the first IAB node can send a data packet to a next-hop IAB node on different channels, the first IAB node may further determine a third channel for transmitting the second data packet. The following describes a manner in which the first IAB node determines an identifier of the third channel.

In a possible implementation, the method 1100 further includes: The first IAB node determines the identifier of the third channel based on configuration information #5. The configuration information #5 indicates an association relationship between an identifier of a third link and third information, the identifier of the third link indicates a link between the first IAB node and the third IAB node, and the third information includes the identifier of the third channel. For example, the third channel is a BH RLC channel or a BH PTM RLC channel. The configuration information #5 may be referred to as a BH (PTP) RLC channel mapping configuration.

For more descriptions of the third information, refer to the related descriptions of the first information in S850 in the foregoing method 800.

In another possible implementation, if the first IAB node is an intermediate IAB node, and the first IAB node receives configuration information #6 after receiving the configuration information #5, the first IAB node determines the identifier of the third channel based on the configuration information #6. Alternatively, if the first IAB node never receives the configuration information #5, the first IAB node determines the identifier of the third channel based on configuration information #6.

The configuration information #6 indicates the identifier of the third channel corresponding to the unicast mode. For example, the configuration information #6 is carried in a defaultUL-BH-RLC-Channel IE corresponding to the unicast mode.

It should be noted that S1150 is an optional step. For example, if the first IAB node forwards a data packet to the third IAB node by default, after receiving the first data packet, the first IAB node may directly send the second data packet to the third IAB node through unicast.

S1160: The first IAB node sends the second data packet to the third IAB node through unicast.

For example, the second data packet is a BAP protocol data unit (protocol data unit, PDU).

The second data packet is determined based on the first data packet. For example, if the first IAB node is an intermediate IAB node, and the first data packet includes the second BAP routing identifier, the second data packet is the same as the first data packet. Alternatively, if the first IAB node is an intermediate IAB node, and the first data packet includes the first BAP routing identifier, the first IAB node replaces the first BAP routing identifier included in the first data packet with the second BAP routing identifier, to generate the second data packet. Alternatively, if the first IAB node is an access IAB node or a donor IAB node, after determining the second BAP routing identifier, the first IAB node adds the second BAP routing identifier to a BAP header of the first data packet, to generate the second data packet.

In a possible implementation, after the first IAB node determines the second BAP address based on the second BAP routing identifier, because the first IAB node may determine, based on the value of the second BAP routing identifier, that the second BAP routing identifier corresponds to the unicast mode, the first IAB node sends the second data packet to the third IAB node through unicast.

In another possible implementation, the first IAB node sends the second data packet to the third IAB node through unicast based on the indication information #1.

In still another possible implementation, if the second configuration information does not indicate the association relationship between the second BAP routing identifier and the first BAP address, the first IAB node may determine, based on an IE that carries the second configuration information, that the second BAP routing identifier corresponds to the unicast mode, so that the first IAB node sends the second data packet to the third IAB node through unicast.

Optionally, in S1150, if the first IAB node further determines the identifier of the third channel, in S1160, the first IAB node sends the second data packet to the third IAB node on the third channel through unicast.

Optionally, if the first IAB node buffers the first data packet in the receive window, the first data packet is the data packet that is first received in the receive window, and/or the first data packet is the data packet with the smallest sequence number in the receive window. In this case, the first IAB node sends the second data packet to the third IAB node through unicast.

In this embodiment of this application, when the multicast mode is supported in the multi-hop IAB scenario, the first IAB node may send a data packet to the third IAB node through unicast based on the indication information #1 or when determining that a multicast path is unavailable, to implement switching from the multicast mode to the unicast mode in the multi-hop IAB scenario.

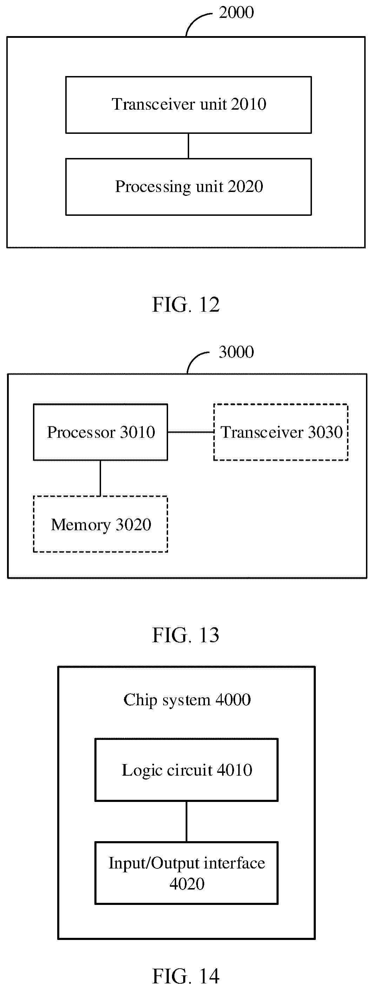

The foregoing describes the methods in embodiments of this application in detail with reference to FIG. 7 to FIG. 11. The following describes apparatuses in embodiments of this application in detail with reference to FIG. 12 to FIG. 14. It should be noted that the apparatuses shown in FIG. 12 to FIG. 14 may implement the steps in the foregoing methods. For brevity, details are not described herein again.

FIG. 12 is a block diagram of a communication apparatus 2000 according to an embodiment of this application. The apparatus 2000 includes a transceiver unit 2010 and a processing unit 2020.

The transceiver unit 2010 may be configured to implement a corresponding communication function. The transceiver unit 2010 may also be referred to as a communication interface or a communication unit. The processing unit 2020 may be configured to perform data processing.

Optionally, the apparatus 2000 further includes a storage unit. The storage unit may be configured to store instructions and/or data. The processing unit 2020 may read the instructions and/or the data in the storage unit, so that the apparatus implements actions of the device in the foregoing method embodiments.

In a design, the apparatus 2000 may be the first IAB node in the foregoing embodiments, or may be a component (for example, a chip) of the first IAB node. The apparatus 2000 may implement steps or procedures performed by the first IAB node in the foregoing method embodiments. The transceiver unit 2010 may be configured to perform receiving and sending related operations of the first IAB node in the foregoing method embodiments. The processing unit 2020 may be configured to perform processing related operations of the first IAB node in the foregoing method embodiments.

In a possible implementation, the transceiver unit 2010 is configured to receive a first data packet. The transceiver unit 2010 is further configured to send a second data packet to a plurality of second IAB nodes through multicast, where the second data packet is determined based on the first data packet, and the plurality of second IAB nodes are next-hop nodes of the first IAB node.

In a possible implementation, the transceiver unit 2010 is configured to receive a first data packet, where the first data packet includes a first BAP routing identifier, and the first BAP routing identifier indicates the destination node of the first data packet and a path for transmitting the first data packet. The processing unit 2020 is configured to: when determining that links between the first IAB node and a plurality of second IAB nodes are unavailable, determine a second BAP routing identifier based on the destination node indicated by the first BAP routing identifier, where the second BAP routing identifier indicates the destination node and a path for transmitting the first data packet, the plurality of second IAB nodes are next-hop nodes of the first IAB node, and the plurality of second IAB nodes correspond to the first BAP routing identifier. The processing unit 2020 is further configured to replace the first BAP routing identifier included in the first data packet with the second BAP routing identifier, to generate a second data packet. The transceiver unit 2010 is further configured to send the second data packet to a third IAB node, where the third IAB node is a next-hop node of the first IAB node, and the third IAB node corresponds to the second BAP routing identifier.

The apparatus 2000 may implement corresponding steps or procedures performed by the first IAB node in the method embodiments according to embodiments of this application. The apparatus 2000 may include units configured to perform the methods performed by the first IAB node in the embodiment shown in FIG. 8 or FIG. 11. For more detailed descriptions of the apparatus 2000, refer to related descriptions in the foregoing method embodiments. Details are not described herein again.

It should be understood that specific processes of performing the corresponding steps by the units are detailed in the foregoing method embodiments. For brevity, details are not described herein again.

It should also be understood that the apparatus 2000 herein is embodied in a form of a functional unit. The term "unit" herein may refer to an application-specific integrated circuit (application-specific integrated circuit, ASIC), an electronic circuit, a processor (for example, a shared processor, a dedicated processor, or a group processor) configured to execute one or more software or firmware programs, a memory, a merged logic circuit, and/or another appropriate component that supports the described function. In an optional example, a person skilled in the art can understand that the apparatus 2000 may be specifically the first IAB node in the foregoing embodiments, and may be configured to perform the procedures and/or the steps corresponding to the first IAB node in the foregoing method embodiments. To avoid repetition, details are not described herein again.

The apparatus 2000 in the foregoing solutions has a function of implementing corresponding steps performed by the first IAB node in the foregoing methods. The function may be implemented by hardware, or may be implemented by hardware executing corresponding software. The hardware or the software includes one or more modules corresponding to the foregoing functions. For example, the transceiver unit may be replaced by a transceiver (for example, a sending unit in the transceiver unit may be replaced by a transmitter machine, and a receiving unit in the transceiver unit may be replaced by a receiver machine), and another unit, for example, the processing unit, may be replaced by a processor, to separately perform receiving-sending operations and a related processing operation in the method embodiments.

In addition, the transceiver unit 2010 may alternatively be a transceiver circuit (for example, may include a receiving circuit and a sending circuit), and the processing unit may be a processing circuit.

It should be noted that the apparatus in FIG. 12 may be the device in the foregoing embodiments, or may be a chip or a chip system, for example, a system-on-a-chip (system on chip, SoC). The transceiver unit may be an input/output circuit or a communication interface. The processing unit is a processor, a microprocessor, or an integrated circuit integrated on the chip. This is not limited herein.

FIG. 13 is a block diagram of a communication apparatus 3000 according to an embodiment of this application. The apparatus 3000 includes a processor 3010, and the processor 3010 is coupled to a memory 3020. Optionally, the apparatus further includes the memory 3020, configured to store a computer program or instructions and/or data. The processor 3010 is configured to: execute the computer program or the instructions stored in the memory 3020, or read the data stored in the memory 3020, to perform the methods in the foregoing method embodiments.

Optionally, there are one or more processors 3010.

Optionally, there are one or more memories 3020.

Optionally, the memory 3020 and the processor 3010 are integrated together, or disposed separately.

Optionally, as shown in FIG. 13, the apparatus 3000 further includes a transceiver 3030, and the transceiver 3030 is configured to receive and/or send a signal. For example, the processor 3010 is configured to control the transceiver 3030 to receive the signal and/or send the signal.

In a solution, the apparatus 3000 is configured to implement operations performed by the device in the foregoing method embodiments. For example, the processor 3010 is configured to execute the computer program or instructions stored in the memory 3020, to implement related operations of the first IAB node in the foregoing method embodiments.

In an implementation process, steps in the foregoing methods can be implemented by using a hardware integrated logical circuit in the processor 3010, or by using instructions in a form of software. The method of the communication disclosed with reference to embodiments of this application may be directly performed by a hardware processor, or may be performed by using a combination of hardware in the processor and a software module. A software module may be located in a mature storage medium in the art, such as a random access memory, a flash memory, a read-only memory, a programmable read-only memory, an electrically erasable programmable memory, or a register. The storage medium includes the memory 3020, and the processor 3010 reads information in the memory 3020 and implements the steps of the foregoing methods in combination with hardware of the processor. To avoid repetition, details are not described herein again.

It should be understood that, in embodiments of this application, the processor may be one or more integrated circuits, and is configured to execute a related program, to perform the method embodiments of this application.

A processor (for example, the processor 3010) may include one or more processors and be implemented as a combination of computing devices. The processor may include one or more of the following: a microprocessor, a microcontroller, a digital signal processor (digital signal processor, DSP), a digital signal processing device (digital signal processing device, DSPD), an application-specific integrated circuit (application-specific integrated circuit, ASIC), a field programmable gate array (field programmable gate array, FPGA), a programmable logic device (programmable logic device, PLD), gate logic, transistor logic, a discrete hardware circuit, a processing circuit, other appropriate hardware or firmware, and/or another appropriate combination of hardware and software, and is configured to perform various functions described in this disclosure. The processor may be a general-purpose processor or a special-purpose processor. For example, the processor 3010 may be a baseband processor or a central processing unit. The baseband processor may be configured to process a communication protocol and communication data. The central processing unit may be configured to enable the apparatus to execute a software program and process data in the software program. A part of the processor may further include a non-volatile random access memory. For example, the processor may further store information of a device type.

The program in this application represents software in a broad sense. A non-limitative example of the software includes program code, a program, a subprogram, instructions, an instruction set, code, a code segment, a software module, an application, a software application, or the like. The program may be run in a processor and/or a computer, to enable the apparatus to perform various functions and/or processes described in this application.

The memory (for example, the memory 3020) may store data required by the processor (for example, the processor 3010) during software execution. The memory may be implemented by using any suitable storage technology. For example, the memory may be any available storage medium that can be accessed by the processor and/or the computer. Non-limiting examples of the storage medium include: a random access memory (random access memory, RAM), a read-only memory (read-only memory, ROM), an electrically erasable programmable read-only memory (electrically EPROM, EEPROM), a compact disc read-only memory (Compact Disc-ROM, CD-ROM), a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM), a removable medium, an optical disc memory, a magnetic disk storage medium, a magnetic storage device, a flash memory, a register, a state memory, a remote mounted memory, a local or remote storage component, or any other medium capable of carrying or storing software, data, or information and accessible by a processor/computer. It should be noted that the memory described in this specification aims to include but is not limited to these memories and any memory of another appropriate type.

The memory (for example, the memory 3020) and the processor (for example, the processor 3010) may be separately disposed or integrated together. The memory may be configured to connect to the processor, so that the processor can read information from the memory, and store information in and/or write information into the memory. The memory may be integrated into the processor. The memory and the processor may be disposed in an integrated circuit.

FIG. 14 is a block diagram of a chip system 4000 according to an embodiment of this application. The chip system 4000 (also referred to as a processing system) includes a logic circuit 4010 and an input/output interface (input/output interface) 4020.

The logic circuit 4010 may be a processing circuit in the chip system 4000. The logic circuit 4010 may be coupled and connected to a storage unit, and invoke instructions in the storage unit, so that the chip system 4000 can implement methods and functions in embodiments of this application. The input/output interface 4020 may be an input/output circuit in the chip system 4000, and output information processed by the chip system 4000, or input to-be-processed data or signaling information into the chip system 4000 for processing.

In a solution, the chip system 4000 is configured to implement operations performed by the device in the foregoing method embodiments. For example, the logic circuit 4010 is configured to implement processing related operations performed by the first IAB node in the foregoing method embodiments, for example, processing related operations performed by the first IAB node in the embodiment shown in FIG. 8 or FIG. 11. The input/output interface 4020 is configured to implement sending and/or receiving related operations performed by the first IAB node in the foregoing method embodiments, for example, sending and/or receiving related operations performed by the first IAB node in the embodiment shown in FIG. 8 or FIG. 11.

An embodiment of this application further provides a computer-readable storage medium, where the computer-readable storage medium stores computer instructions for implementing the method performed by the first IAB node in the foregoing method embodiments.

An embodiment of this application further provides a computer program product including instructions. When the instructions are executed by a computer, the method performed by the first IAB node in the foregoing method embodiments is implemented.

An embodiment of this application further provides a communication system. The communication system includes the first IAB node and the second IAB node in the foregoing embodiments, or includes the first IAB node and the third IAB node.

For explanations and beneficial effects of related content in any one of the apparatuses provided above, refer to the corresponding method embodiment provided above. Details are not described herein again.

In the several embodiments provided in this application, it should be understood that the disclosed apparatus and method may be implemented in other manners. For example, the apparatus embodiments described above are only examples. For example, the foregoing unit division is merely a logical function division. During actual implementation, another division manner may be used. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The foregoing units described as separate parts may or may not be physically separate, and parts displayed as units may or may not be physical units, may be located in one position, or may be distributed on a plurality of network units. Some or all of the units may be selected based on actual requirements to implement the solutions provided in this application.

In addition, functional units in embodiments of this application may be integrated into one unit, each of the units may exist alone physically, or two or more units may be integrated into one unit.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the scope of this application.

When software is used to implement the embodiments, all or a part of the embodiments may be implemented in a form of a computer program product. The computer program product includes one or more computer instructions. When the computer program instructions are loaded and executed on the computer, the procedure or functions according to embodiments of this application are all or partially generated. The computer may be a general-purpose computer, a dedicated computer, a computer network, or other programmable apparatuses. For example, the computer may be a personal computer, a server, or a network device. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. For the computer-readable storage medium, refer to the foregoing descriptions.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A data transmission method, comprising:
receiving, by a first integrated access and backhaul IAB node, a first data packet; and
sending, by the first IAB node, a second data packet to a plurality of second IAB nodes through multicast, wherein the second data packet is determined based on the first data packet, and the plurality of second IAB nodes are next-hop nodes of the first IAB node.

2. The method according to claim 1, wherein sending, by the first IAB node, the second data packet to the plurality of second IAB nodes through multicast comprises:
sending, by the first IAB node, the second data packet to the plurality of second IAB nodes through multicast based on a first backhaul adaptation protocol BAP address, wherein the first BAP address is determined based on first configuration information and a first BAP routing identifier corresponding to the first data packet, the first BAP address corresponds to the plurality of second IAB nodes, the first BAP routing identifier indicates the destination node of the first data packet and a path for transmitting the first data packet, and the first configuration information indicates an association relationship between the first BAP routing identifier and the first BAP address.

3. The method according to claim 2, wherein the first BAP routing identifier corresponds to a multicast mode.

4. The method according to claim 2, wherein the first configuration information further indicates an association relationship between the first BAP routing identifier and a second BAP address, the second BAP address corresponds to a third IAB node, and the third IAB node is a next-hop node of the first IAB node; and sending, by the first IAB node, the second data packet to the plurality of second IAB nodes through multicast comprises:
sending, by the first IAB node, the second data packet to the plurality of second IAB nodes through multicast based on indication information, wherein the indication information indicates to send the first data packet through multicast.

5. The method according to claim 4, wherein the first data packet further comprises the indication information, and the method further comprises:
obtaining, by the first IAB node, the indication information from the first data packet.

6. The method according to claim 5, wherein the indication information is carried in a BAP header of the first data packet.

7. The method according to claim 4, wherein the method further comprises:
receiving, by the first IAB node, the indication information from a donor IAB node.

8. The method according to claim 7, wherein receiving, by the first IAB node, the indication information from the donor IAB node comprises:
receiving, by the first IAB node, the indication information from the donor IAB node by using a radio resource control RRC message or an F1 application protocol F1AP message.

9. The method according to claim 2, wherein the first configuration information further indicates an association relationship between the first BAP routing identifier and a second BAP address, the second BAP address corresponds to a third IAB node, and the third IAB node is a next-hop node of the first IAB node; and sending, by the first IAB node, the second data packet to the plurality of second IAB nodes through multicast comprises:
when determining that a link between the first IAB node and the third IAB node is unavailable, sending, by the first IAB node, the second data packet to the plurality of second IAB nodes through multicast.

10. The method according to claim 2, wherein the first data packet comprises a second BAP routing identifier of the first data packet, the second BAP routing identifier corresponds to a unicast mode, and the second BAP routing identifier indicates the destination node of the first data packet and a path for transmitting the first data packet; and the method further comprises:
determining, by the first IAB node, a second BAP address based on the second BAP routing identifier and second configuration information, wherein the second BAP address corresponds to a third IAB node, and the second configuration information indicates an association relationship between the second BAP routing identifier and the second BAP address;
determining, by the first IAB node, that a link between the first IAB node and the third IAB node is unavailable; and
determining, by the first IAB node, the first BAP routing identifier based on the destination node indicated by the second BAP routing identifier; and
before sending, by the first IAB node, the second data packet to the plurality of second IAB nodes through multicast, the method further comprises:
replacing, by the first IAB node, the second BAP routing identifier comprised in the first data packet with the first BAP routing identifier, to generate the second data packet.

11. The method according to any one of claims 1 to 10, wherein the method further comprises:
determining, by the first IAB node, an identifier of a first channel based on third configuration information, wherein the third configuration information indicates an association relationship between an identifier of a first link and first information, the identifier of the first link indicates links between the first IAB node and the plurality of second IAB nodes, and the first information comprises the identifier of the first channel; and
sending, by the first IAB node, the second data packet to the plurality of second IAB nodes through multicast comprises:
sending, by the first IAB node, the second data packet to the plurality of second IAB nodes on the first channel through multicast.

12. The method according to claim 11, wherein the first information further comprises one or more of the following: an identifier of a second link, an identifier of a second channel, a service type identifier, a destination IP address of the first data packet, a flow label corresponding to the first data packet, and a differentiated services code point configuration corresponding to the first data packet, wherein the second link is a link used by the first IAB node to receive the first data packet, the second channel is a channel used by the first IAB node to receive the first data packet, and the service type identifier is for identifying a service type of the first data packet.

13. The method according to any one of claims 1 to 12, wherein the first IAB node is an intermediate IAB node; and before sending, by the first IAB node, the second data packet to the plurality of second IAB nodes through multicast, the method further comprises:
determining, by the first IAB node, that a packet identifier corresponding to the first data packet is different from packet identifiers corresponding to other data packets in a receive window, wherein the packet identifier comprises a BAP packet identifier.

14. The method according to any one of claims 1 to 12, wherein the first IAB node is an intermediate IAB node; and before sending, by the first IAB node, the second data packet to the plurality of second IAB nodes through multicast, the method further comprises:
determining, by the first IAB node, that a packet identifier corresponding to the first data packet is different from N packet identifiers buffered by the first IAB node, wherein the N packet identifiers correspond to N data packets received by the first IAB node before receiving the first data packet, the packet identifier comprises a BAP packet identifier, and N is a positive integer.

15. The method according to claim 14, wherein the method further comprises:
if N<M, buffering, by the first IAB node, the packet identifier corresponding to the first data packet; or
if N=M, deleting, by the first IAB node, a first buffered packet identifier in the N packet identifiers, and buffering the packet identifier corresponding to the first data packet, wherein
M is a maximum quantity of packet identifiers for which buffering is supported by the first IAB node, and M is a positive integer.

16. The method according to any one of claims 13 to 15, wherein the packet identifier further comprises a BAP routing identifier of a data packet and/or a BAP address of a source node of the data packet, and the BAP routing identifier of the data packet indicates a destination node of the data packet and a path for transmitting the data packet.

17. The method according to any one of claims 1 to 12, wherein the first IAB node is an access IAB node, the first data packet is an uplink data packet, and the method further comprises:
determining, by the first IAB node, the first BAP routing identifier based on fourth configuration information, wherein the first BAP routing identifier is for determining the first BAP address corresponding to the plurality of second IAB nodes, and the fourth configuration information indicates the first BAP routing identifier corresponding to the multicast mode.

18. The method according to any one of claims 1 to 12, wherein the first IAB node is an access IAB node, the first data packet is an uplink data packet, and the method further comprises:
determining, by the first IAB node, the first BAP routing identifier based on fifth configuration information, wherein the first BAP routing identifier is for determining the first BAP address corresponding to the plurality of second IAB nodes, the fifth configuration information indicates an association relationship between the first BAP routing identifier and the service type identifier, and indicates an association relationship between the second BAP routing identifier and the service type identifier, the second BAP routing identifier indicates the destination node of the first data packet and the path for transmitting the first data packet, and the service type identifier is for identifying the service type of the first data packet.

19. The method according to any one of claims 1 to 12, wherein the first IAB node is a donor IAB node, the first data packet is a downlink data packet, and the method further comprises:
determining, by the first IAB node, the first BAP routing identifier based on sixth configuration information, wherein the first BAP routing identifier is for determining the first BAP address corresponding to the plurality of second IAB nodes, the sixth configuration information indicates an association relationship between the first BAP routing identifier and second information, and indicates an association relationship between the second BAP routing identifier and the second information, the second BAP routing identifier indicates the destination node of the first data packet and the path for transmitting the first data packet, and the second information comprises the destination IP address of the data packet.

20. A data transmission method, comprising:
receiving, by a first integrated access and backhaul IAB node, a first data packet, wherein the first data packet comprises a first backhaul adaptation protocol BAP routing identifier, and the first BAP routing identifier indicates the destination node of the first data packet and a path for transmitting the first data packet;
when the first IAB node determines that links between the first IAB node and a plurality of second IAB nodes are unavailable, determining, by the first IAB node, a second BAP routing identifier based on the destination node indicated by the first BAP routing identifier, wherein the second BAP routing identifier indicates the destination node and a path for transmitting the first data packet, the plurality of second IAB nodes are next-hop nodes of the first IAB node, and the plurality of second IAB nodes correspond to the first BAP routing identifier;
replacing, by the first IAB node, the first BAP routing identifier comprised in the first data packet with the second BAP routing identifier, to generate a second data packet; and
sending, by the first IAB node, the second data packet to a third IAB node, wherein the third IAB node is a next-hop node of the first IAB node, and the third IAB node corresponds to the second BAP routing identifier.

21. The method according to claim 20, wherein the method further comprises:
when one or more of the following conditions are met, determining, by the first IAB node, that the links between the first IAB node and the plurality of second IAB nodes are unavailable: channel quality of a link between the first IAB node and at least one second IAB node in the plurality of second IAB nodes is lower than a channel quality threshold, a radio link failure occurs on a link between the first IAB node and at least one second IAB node in the plurality of second IAB nodes, or a beam failure occurs on a link between the first IAB node and at least one second IAB node in the plurality of second IAB nodes.

22. An apparatus, comprising a module or a unit configured to perform the method according to any one of claims 1 to 21.

23. An apparatus, comprising at least one processor, wherein the at least one processor is coupled to at least one memory, and the at least one processor is configured to execute a computer program or instructions stored in the at least one memory, to enable the apparatus to perform the method according to any one of claims 1 to 21.

24. An apparatus, comprising a processor and an interface circuit, wherein the interface circuit is configured to receive computer code or instructions and transmit the computer code or the instructions to the processor, and the processor is configured to run the computer code or the instructions to perform the method according to any one of claims 1 to 21.

25. A computer-readable storage medium, comprising a computer program, wherein when the computer program runs on a computer, the method according to any one of claims 1 to 21 is implemented.

26. A computer program product, comprising computer program code, wherein when the computer program code is run on a computer, the method according to any one of claims 1 to 19 or the method according to claim 20 or 21 is performed.

27. A communication system, comprising at least one IAB node, wherein the at least one IAB node comprises a first IAB node, and the first IAB node is configured to perform the method according to any one of claims 1 to 19, or the first IAB node is configured to perform the method according to claim 20 or 21.

28. The communication system according to claim 27, wherein the at least one IAB node further comprises a plurality of second IAB nodes, and the plurality of second IAB nodes are configured to receive a data packet from the first IAB node.

29. The communication system according to claim 27 or 28, wherein the at least one IAB node further comprises a third IAB node, and the third IAB node is configured to receive a data packet from the first IAB node.
